# EUROPÄISCHE PATENTSCHRIFT

(11) **EP 3 670 577 B1**
(45) Veröffentlichungstag und Bekanntmachung des Hinweises auf die Patenterteilung: **15.04.2026**
(21) Anmeldenummer: 19210866.0
(22) Anmeldetag: 22.11.2019
(51) Int. Cl.: C08G 69/26, C08L 77/06, B29C 45/03, B32B 7/12, B32B 17/06, B32B 17/10, B32B 27/34, B32B 27/40, B32B 27/08

(54) **POLYAMID-FORMMASSEN FÜR GLASVERBUNDE**
POLYAMIDE MOULDING MATERIAL FOR GLASS COMPOSITIONS
MATIÈRES DE MOULAGE DE POLYAMIDE POUR VITRAGES COMPOSITES

(30) Priorität: 19.12.2018 EP 18214070
(43) Veröffentlichungstag der Anmeldung: 24.06.2020
(73) Patentinhaber: EMS-CHEMIE AG, 7013 Domat/Ems (CH)
(72) Erfinder: AEPLI, Etienne, 7013 Domat/Ems (CH); STÖPPELMANN, Georg, 7402 Bonaduz (CH); HOFFMANN, Botho, 7013 Domat/Ems (CH)
(74) Vertreter: Bremi, Tobias Hans

(56) Entgegenhaltungen:
- WO-A1-2006/084862
- JP-A- 2015 199 938
- US-A1- 2002 037 972
- US-A1- 2012 004 353
- US-A1- 2012 214 904

## Beschreibung

### TECHNISCHES GEBIET

Die vorliegende Erfindung betrifft thermoplastische Polyamid-Formmassen, die besonders geeignet sind für Verbundstrukturen mit mineralischem Glas unter Verwendung einer Schicht aus Polyurethan als Haftvermittler. Weiter betrifft die vorliegende Erfindung entsprechende Polyamid/mineralisches Glas Werkstoffverbunde sowie die Verwendung von spezifischen Additiven zu Polyamid-Formmassen, konkret Polyethyleniminen, zur Verbesserung der Haftung zu Polyurethan.

### STAND DER TECHNIK

Thermoplastische Polyamid-Werkstoffe haben sich für die Herstellung von strukturellen Bauteilen unter anderem wegen ihrer guten mechanischen Eigenschaften, der Widerstandsfähigkeit gegenüber Chemikalien, der guten Verarbeitbarkeit, des niedrigen spezifischen Gewichts etc. in vielen Bereichen durchgesetzt, insbesondere im Automobilbereich, aber auch im Elektronik-Bereich, beispielsweise für Gehäuse von tragbaren Geräten.

Insbesondere im Bereich der Mobiltelefone aber auch im Bereich der Computer und tragbaren Computer werden für Display-Anwendungen Glasscheiben eingesetzt. Diese Scheiben aus mineralischem Glas müssen mit den Gehäusebestandteilen verbunden werden, und die Verbundhaftung soll so stark wie möglich sein. In der Regel wird für das verkleben von Glas im industriellen Bereich Polyurethan-Kleber eingesetzt. Dieser haftet ausgezeichnet am mineralischen Glas und kann, insbesondere wenn als Heisskleber ausgestaltet, optimal verarbeitet werden.

Problematisch in diesem Zusammenhang ist aber, dass die Haftung zwischen Polyurethan-Kleber und Polyamid ungenügend ist. Modifiziert man den Polyurethan-Kleber, so verliert man die hervorragenden Haftungseigenschaften zu mineralischem Glas, und modifiziert man das Polyamid, so verliert man die hervorragenden mechanischen Eigenschaften, die gute Verarbeitbarkeit, sowie die anderen oben genannten Eigenschaften des Polyamides.

Hier greift die vorliegende Erfindung ein.

Aus der US2012/214904 sind thermoplastische Formmassen bekannt, enthaltend A) 10 bis 99,999 Gew .-% eines Polyimids B) 0,001 bis 20 Gew .-% Eisenpulver mit einer Teilchengrösse von höchstens 10 µm (d50-Wert), erhältlich durch thermische Zersetzung von Pentacarbonyleisen, C) 0 bis 70 Gew .-% weiterer Additive, wobei die Summe der Gewichtsprozente der Komponenten A) bis C) 100% beträgt.

Gemäss US2002/037972 können transparente Formmassen hergestellt werden, indem 50 bis 99 Gew.-Teile eines transparenten Polyamids und 1 bis 50 Gew.-Teile eines Pfropfcopolymers gemischt werden, so dass die Summe der Gew.-Teile des transparenten Polyamids und des Pfropfcopolymers 100 beträgt. Das Pfropfcopolymerisat wird hergestellt, indem man 0,5 bis 25 Gew .-%, bezogen auf das Pfropfcopolymerisat, eines verzweigten Polyamins mit mindestens 4 Stickstoffatomen und einem zahlenmittleren Molekulargewicht Mn von mindestens 146 g / mol mit Polyamid, ausgewählt aus der Gruppe bestehend aus Lactamen, w-Aminocarbonsäuren, äquimolaren Kombinationen von Diamin und Dicarbonsäure und Kombinationen davon, umsetzt.

Aus der JP2015199938 ist eine Polyamidharzzusammensetzung mit ausgezeichneter Wärmealterungsbeständigkeit bekannt. Die Polyamidharzzusammensetzung umfasst (A) Polyamidharz, (B) Metallaluminat und (C) Polyethyleniminpolymer und hat ein Mw / Mn Verhältnis von 2,0 oder mehr sowie ein Mw / Mn Verhältnis von 3,0 oder mehr nach Wärmealterung für 1000 Stunden bei 120 ° C.

### DARSTELLUNG DER ERFINDUNG

Es ist entsprechend Aufgabe der Erfindung, eine thermoplastische Polyamid-Formmasse bereitzustellen, welche für die genannten Anwendungen geeignete mechanische Eigenschaften aufweist, aber gleichzeitig auch unter Verwendung von Polyurethan-Klebern in einem einfachen Prozess und mit ausgezeichneten Haltekräften mit mineralischem Glas verbunden werden kann.

Diese Aufgabe wird gelöst durch die Gegenstände der Ansprüche, insbesondere durch eine erfindungsgemäss modifizierte thermoplastische Polyamid-Formmasse gemäss Anspruch 1, durch einen Verbund aus wenigstens einer Schicht auf Basis von Polyamid, einer daran angrenzenden Haftvermittlerschicht aus Polyurethan, und eine daran angrenzende Schicht aus mineralischem Glas, sowie die Verwendung von Polyethyleniminen, oder Copolymeren oder Derivaten davon, in einer Polyamid-Formmasse zur Verbesserung der Verbundhaftung zu Polyurethan.

Ein Kern der Erfindung besteht damit letzten Endes darin, dass unerwarteter Weise gefunden wurde, dass die Zugabe von Polyethyleniminen zu einer thermoplastischen Polyamid-Matrix gemäss Anspruch 1 dazu führt, dass die Haftung zu Polyurethan, insbesondere zu Polyurethan, das üblicherweise zum Verkleben mit mineralischem Glas eingesetzt wird, aussergewöhnlich erhöht wird. Dies ohne dass dabei die vorteilhaften mechanischen Eigenschaften verloren gehen. Erstaunlich ist das unter anderem deswegen, weil die reine Erhöhung der Zahl der Amino-Endgruppen des Polyamids, beispielsweise über eine entsprechende Führung der Reaktion zur Herstellung eines Polyamid-Werkstoffs, die Haftungseigenschaften gegenüber Polyurethan überhaupt nicht im gleichen Masse verbessern kann, und zudem den Nachteil aufweist, dass durch die Erhöhung der Amino-Endgruppen die mechanischen Eigenschaften des Polyamid-Werkstoffs einschneidend verschlechtert werden.

Es ist grundsätzlich aus anderen Gebieten bekannt, dass einem Polyamid-Werkstoff Polyethylenimine beigemischt werden können, dies aber nicht im Zusammenhang mit der Frage der Verbundhaftung an Polyurethan, und auch nicht im Zusammenhang mit spezifischen Polyamid-Matrix-Systemen, wie sie hier beschrieben werden.

Namentlich sei im Zusammenhang mit dem Stand der Technik auf folgende Dokumente hingewiesen:
WO-A-2006084862 beschreibt thermoplastische Formmassen, enthaltend: A) 10 bis 99 Gew.-% mindestens eines thermoplastischen Polyamids, B) 0,1 bis 5 Gew.-% mindestens eines Polyethyleniminhomo- oder -copolymerisates, C) 0,05 bis 3 Gew.-% eines Schmiermittels, D) 0,05 bis 3 Gew.-% eines kupferhaltigen Stabilisators oder eines sterisch gehinderten Phenols oder deren Mischungen, E) 0 bis 60 Gew.-% weiterer Zusatzstoffe, wobei die Summe der Gewichtsprozente der Komponenten (A) bis (E) 100 % ergibt.

WO-A-0200780 beschreibt, zur Anwendung insbesondere im Automobilbereich für Bauteile, die bei hohen Temperaturen Dieselkraftstoff ausgesetzt sind, thermoplastische Formmassen auf Basis von insbesondere Polyoxymethylenen (POM), enthaltend als wesentliche Komponenten A) 29 bis (100 Gew.-% minus 1 ppb) mindestens eines thermoplastischen Polymeren, B) 1 ppb bis 1 Gew.-% mindestens eines Polyethyleniminhomo- oder -copolymerisates, sowie darüber hinaus C) 0 bis 70 Gew.-% weiterer Zusatzstoffe, wobei die Gewichtsprozente der Komponenten A) bis C) stets 100 % ergeben.

WO-A-2006084862 beschreibt für Bauteile, die hohen Temperaturen ausgesetzt sind, zum Beispiel für strukturelle Bauteile im Automobilbereich, thermoplastische Formmassen, enthaltend: A) 10 bis 99 Gew.-% mindestens eines thermoplastischen Polyamids, insbesondere Polyamid 6, B) 0,1 bis 5 Gew.-% mindestens eines Polyethyleniminhomo- oder -copolymerisates, C) 0,05 bis 3 Gew.-% eines Schmiermittels, D) 0,05 bis 3 Gew.-% eines kupferhaltigen Stabilisators oder eines sterisch gehinderten Phenols oder deren Mischungen, E) 0 bis 60 Gew.-% weiterer Zusatzstoffe, wobei die Summe der Gewichtsprozente der Komponenten (A) bis (E) 100 % ergibt.

Die hier im Rahmen dieser Anmeldung vorgeschlagenen thermoplastischen Polyamid-Formmassen sind bevorzugt frei von derartigen Schmiermitteln, die beispielsweise wie folgt ausgebildet sein können: Aluminium-, Alkali-, Erdalkalisalze oder Ester- oder Amide von Fettsäuren mit 10 bis 44 C-Atomen, zum Beispiel mit 12 bis 40 C-Atomen. Die Metallionen sind zum Beispiel Erdalkali und Al, wobei Ca oder Mg ebenfalls eingesetzt werden können. Die Metallsalze sind zum Beispiel Ca-Stearat und Ca-Montanat sowie Al-Stearat. Es können auch als solche Schmiermittel Mischungen verschiedener Salze eingesetzt werden, wobei das Mischungsverhältnis beliebig ist. Die Carbonsäuren können 1- oder 2-wertig sein. Als Beispiele seien Pelargonsäure, Palmitinsäure, Laurinsäure, Margarinsäure, Dodecandisäure, Behensäure und besonders bevorzugt Stearinsäure, Caprinsäure sowie Montansäure (Mischung von Fettsäuren mit 30 bis 40 C-Atomen) genannt. Die aliphatischen Alkohole können 1- bis 4-wertig sein. Beispiele für Alkohole sind n-Butanol, n-Octanol, Stearylalkohol, Ethylenglykol, Propylenglykol, Neopentylglykol, Pentaerythrit, wobei Glycerin und Pentaerythrit häufig sind. Die aliphatischen Amine können 1- bis 3-wertig sein. Beispiele hierfür sind Stearylamin, Ethylendiamin, Propylendiamin, Hexamethylendiamin, Di(6-Aminohexyl)amin. Ester oder Amide sind entsprechend Glycerindistearat, Glycerintristearat, Ethylendiamin-distearat, Glycerinmonopalmitat, Glycerintrilaurat, Glycerinmonobehenat und Penta-erythrittetrastearat. Es können auch Mischungen verschiedener Ester oder Amide oder Ester mit Amiden in Kombination eingesetzt werden, wobei das Mischungsverhältnis beliebig ist. Solche Schmiermittel sind wie gesagt bevorzugt in der hier vorgeschlagenen Formmasse nicht enthalten.

WO-A-2010076145 beschreibt, ebenfalls für Bauteile, die hohen Temperaturen ausgesetzt sind, zum Beispiel für strukturelle Bauteile im Automobilbereich, thermoplastische Formmassen enthaltend A) 10 bis 99,94 Gew.-% eines Polyamides, insbesondere Polyamid 6, B) 0,05 bis 5 Gew.-% eines Polyethyleniminhomo- oder -copolymerisates, C) 0,01 bis 20 Gew.-% Eisenpulver, D) 0 bis 70 Gew.-% weiterer Zusatzstoffe, wobei die Summe der Gewichtsprozente A bis D 100 % ergibt.

Die hier im Rahmen dieser Anmeldung vorgeschlagenen thermoplastischen Polyamid Formmassen sind bevorzugt frei von derartigem Eisenpulver.

WO-A-2015024912 und ähnlich WO2015024911 beschreiben ein Compositkunststoffteil, das eine erste Kunststoffkomponente und eine zweite Kunststoffkomponente aufweist und ein Polyethylenimin zur Verbesserung der Adhäsion dazwischen enthält. Weiterhin betrifft sie ein Verfahren zur Herstellung dieses Compositkunststoffteils, ein Verfahren zur Verbesserung der Adhäsion zwischen einer ersten Kunststoffkomponente und einer zweiten Kunststoffkomponente in einem Compositkunststoffteil sowie die Verwendung von Polyethylenimin zur Verbesserung der Adhäsion zwischen einer ersten Kunststoffkomponente und einer zweiten Kunststoffkomponente in einem Compositkunststoffteil. Die Teile werden beim hier beschriebenen Verfahren ohne Haftvermittler direkt aneinander geformt, gezeigt werden die Effekte ausschliesslich für zwei Bauteile aus Polyamid 6.

WO-A-2011138300 beschreibt ein Verbundteil, das aus mindestens einem Teilstück aus einer Polyamidformmasse und mindestens einem Teilstück aus einem vulkanisierten Elastomer, beispielsweise EPDM, EPM, ACM, Fluorkautschuk, NBR, H-NBR oder AEM einzeln oder in Kombination. Dabei besteht die Polyamidformmasse zu mindestens 40 Gew.-% aus der Mischung folgender Komponenten: a) 60 bis 99 Gew.-Teile Polyamid sowie b) 1 bis 40 Gew.-Teile eines Pfropfcopolymers, das unter Verwendung folgender Monomere hergestellt werden kann: a) 0,5 bis 25 Gew.-%, bezogen auf das Pfropfcopolymer, eines Polyamins mit mindestens 4 Stickstoffatomen sowie b) 75 bis 99,5 Gew.-%, bezogen auf das Pfropfcopolymer, polyamidbildender Monomere, ausgewählt aus Lactamen, ω-Aminocarbonsäuren und/oder äquimolaren Kombinationen von Diamin und Dicarbonsäure, wobei die Summe der Gew.-Teile von a) und b) 100 beträgt. Die Anwesenheit des Pfropfcopolymers bewirkt angeblich eine verbesserte Haftung zwischen den Teilstücken.

Die hier im Rahmen dieser Anmeldung vorgeschlagenen thermoplastischen Polyamid-Formmassen respektive Verbundteile sind frei von derartigen Elastomer-Elementen, die beispielsweise EPDM, EPM, ACM, Fluorkautschuk, NBR, H-NBR oder AEM einzeln oder in Kombination sein können. Die Elastomere können in Form eines Kautschukcompounds eingesetzt sein, das beispielsweise Vulkanisationsmittel, Vulkanisationsaktivatoren, Öle und/oder Füllstoffe enthalten. Die hier vorgeschlagenen thermoplastischen Polyamid-Formmassen sind zudem bevorzugt frei von Pfropfcopolymer, das unter Verwendung folgender Monomerer hergestellt werden kann: a) 0,5 bis 25 Gew.-%, bezogen auf das Pfropfcopolymer, eines Polyamins mit mindestens 4 Stickstoffatomen sowie b) 75 bis 99,5 Gew.-%, bezogen auf das Pfropfcopolymer, polyamidbildender Monomere, ausgewählt aus Lactamen, ω-Aminocarbonsäuren und/oder äquimolaren Kombinationen von Diamin und Dicarbonsäure, wobei die Summe der Gew.-Teile von a) und b) 100 beträgt.

Vorzugsweise werden im Rahmen dieser Anmeldung als Komponente (B) ausschliesslich ungepfropfte Polyethylenimine eingesetzt, d.h. die Formmasse als Ganzes ist frei von gepfropften Polyethyleniminen.

EP-A-1541336 betrifft einen thermoplastischen Mehrschichtverbund aufgebaut aus wenigstens einer ersten Schicht auf Basis von Fluorpolymeren, sowie wenigstens einer weiteren, wenigstens bereichsweise unmittelbar an die erste Schicht grenzenden zweiten Schicht. Bei einem derartigen Mehrschichtverbund wird eine Haftung zwischen den beiden Schichten erreicht, indem die zweite Schicht auf Basis von Polyamid/Polyamin-Copolymeren aufgebaut ist. Eine derartige zweite Schicht kann insbesondere vorteilhafterweise als Haftvermittlerschicht zu einer weiteren, dritten Schicht verwendet werden, welche auf Basis von Polyamid aufgebaut ist. Als Hohlkörper bzw. Hohlprofil ausgebildet kann ein derartiger Aufbau aus wenigstens 3 Schichten als Kraftstoffleitung im Kraftfahrzeugbereich eingesetzt werden.

Vorzugsweise werden im Rahmen dieser Anmeldung als Komponente (B) ausschliesslich Polyethylenimine eingesetzt, die keine amidbildenden Coplymerbausteine enthalten, d.h. die Formmasse als Ganzes ist frei von Polyethyleniminen, die als Copolymere ausgebildet sind, insbesondere frei von Polyethyleniminen, die amidbildende Copolymerbausteine enthalten, oder frei von Polyethyleniminen, die Copolymere mit Polyamid 6 sind.

Vorzugsweise ist weiterhin die Formmasse frei von Aluminiumsalzen,, insbesondere frei von Aluminaten, d. h. Salzen der Aluminiumsäure HAlO₂·H₂O.

EP-A-1065236 beschreibt ein Pfropfcopolymer, das eine verbesserte Lösemittel- und Kraftstoffbeständigkeit aufweist, und das unter Verwendung folgender Monomere hergestellt wird: a) 0,5 bis 25 Gew.-%, bezogen auf das Pfropfcopolymer, eines Polyamins mit mindestens 11 Stickstoffatomen und einem zahlenmittleren Molekulargewicht von mindestens 500 g/mol; b) polyamidbildende Monomere, ausgewählt aus Lactamen und ω-Aminocarbonsäuren; c) Oligocarbonsäure, ausgewählt aus 0,015 bis etwa 3 Mol-% Dicarbonsäure und 0,01 bis etwa 1,2 Mol-% Tricarbonsäure, jeweils bezogen auf Lactam bzw. ω-Aminocarbonsäure, wobei die Aminogruppenkonzentration des Pfropfcopolymers im Bereich von 100 bis 2500 mmol/kg liegt, weist.

Konkret betrifft die vorliegende Erfindung entsprechend eine thermoplastische Polyamid-Formmasse bestehend aus:
(A) 30-99.9 Gewichtsprozent wenigstens eines Polyamids gemäss Anspruch 1,;
(B) 0.8-5.0 Gewichtsprozent Polyethylenimin (PEI) oder Copolymere oder Derivate davon;
(C) 5-60 Gewichtsprozent Füll- und/oder Verstärkungsstoffe gemäss Anspruch 1;
(D) 0-5.0 Gewichtsprozent Additive gemäss Anspruch 1;
wobei die Summe gebildet aus (A)-(D) 100 % der thermoplastischen Polyamid-Formmasse ergibt.

Im Sinne der vorliegenden Erfindung wird unter dem Begriff "Polyamid" (Abkürzung PA) ein Oberbegriff verstanden, welcher Homopolyamide und Copolyamide umfasst. Die gewählten Schreibweisen und Abkürzungen für Polyamide und deren Monomere entsprechen den in der ISO-Norm 16396-1 (2015(D)) festgelegten. Die darin verwendeten Abkürzungen werden im folgenden Synonym zu den IUPAC Namen der Monomere verwendet, insbesondere kommen folgende Abkürzungen für Monomere vor: MACM für Bis(4-amino-3-methyl-cyclohexyl)methan (auch als 3,3'-Dimethyl-4,4'-diaminodicyclohexylmethan bezeichnet, CAS-Nr. 6864-37-5), PACM für Bis(4-aminocyclohexyl)methan (auch als 4,4'-Diaminodicyclohexylmethan bezeichnet, CAS-Nr. 1761-71-3), TMDC für Bis(4-amino-3,5-dimethyl-cyclohexyl)methan (auch als 3,3',5,5'-Tetramethyl-4,4'-diaminodicyclohexylmethan bezeichnet, CAS-Nr. 65962-45-0), T für Terephthalsäure (CAS-Nr. 100-21-0), I für Isophthalsäure (CAS-Nr. 121-95-5).

Amorphe Polyamide weisen verglichen mit den teilkristallinen Polyamiden keine oder nur eine sehr geringe, kaum nachweisbare Schmelzwärme, auf. Die amorphen Polyamide zeigen in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von maximal 5 J/g, besonders bevorzugt von maximal 3 J/g, ganz besonders bevorzugt von 0 bis 1 J/g. Amorphe Polyamide besitzen auf Grund ihrer Amorphizität keinen Schmelzpunkt.

Im Sinne der Erfindung sind teilkristalline Polyamide solche Polyamide, die in der dynamischen Differenz-Kalorimetrie (engl. Differential Scanning Calorimetry, DSC) nach ISO 11357 (2013) bei einer Aufheizrate von 20 K/min bevorzugt eine Schmelzwärme von mehr als 5 J/g, besonders bevorzugt von wenigstens 25 J/g, ganz besonders bevorzugt von wenigstens 30 J/g aufweisen.

Das C/N-Verhältnis der jeweiligen Polyamide ergibt sich aus der Summe der Kohlenstoffatome (C) der die Polyamide aufbauenden Monomere, also den Dicarbonsäuren, Diaminen sowie ggf. Lactamen und Aminocarbonsäuren, in Bezug auf die Summe der Stickstoffatome (N) in diesen Monomeren, die im Polyamid zu Amidbindungen reagieren können. Enthält ein Polyamid mehrere Polyamideinheiten, wie beispielsweise PA 11/913 (30:70 mol-%), das die PA-Einheiten "11" und "913" umfasst, so werden die C/N-Verhältnisse der einzelnen PA-Einheiten gemäss ihrem Molanteil im Polyamid gewichtet. Für das Beispiel PA 11/913 (30:70 mol-%) resultiert somit ein C/N-Verhältnis von (0.3 * 11) + 0.7 * (9 + 13) / 2 = 11.

Gemäss einer ersten bevorzugten Ausführungsform ist die Formmasse dadurch gekennzeichnet, dass die **Komponente (A)** in einem Anteil von 32-94.4 Gewichtsprozent, vorzugsweise im Bereich von 44.5-69.0 Gewichtsprozent vorliegt.

Die Komponente (A) besteht aus zwei Komponenten, nämlich:
(A1) 20-100 Gewichtsprozent, vorzugsweise 40-60 Gewichtsprozent wenigstens eines aliphatischen teilkristallinen Polyamids gemäss Anspruch 1;
(A2) 0-80 Gewichtsprozent, vorzugsweise 40-60 Gewichtsprozent wenigstens eines amorphen teilaromatischen Polyamids und/oder wenigstens eines cycloaliphatischen, vorzugsweise amorphen Polyamids,
wobei sich die Gewichtsprozent der Komponenten (A1) und (A2) auf 100 Gewichtsprozent der Komponente (A) ergänzen.

Die Polyamide der Komponente (A1) sind vom Typ AABB, d. h. aufgebaut aus Dicarbonsäuren und Diaminenund die teilkristallinen aliphatischen Polyamide der Komponente (A1) sind ausgewählt aus der Gruppe bestehend aus: 612, 614, 616.

Bevorzugt verfügen die Polyamide der Komponente (A1) über einen Schmelzpunkt von wenigstens 170 °C, vorzugsweise im Bereich von 180-340 °C oder, vorzugsweise wenn aliphatisch, im Bereich von 180 - 230 °C.

Weiterhin bevorzugt verfügen die Polyamide der Komponente (A), von (A1), von (A2), oder von (A1) und (A2) über eine relative Viskosität gemessen in m-Kresol (0,5 Gew.-%, 20°C) im Bereich von 1,4 bis 3.0, bevorzugt im Bereich von 1,45 bis 2.70, insbesondere im Bereich von 1,50 bis 2.40.

Bevorzugt sind die cycloaliphatischen Polyamide der Komponente (A2) ausgewählt aus der Gruppe bestehend aus MACM12/PACM12, MACM14/PACM14, MACM16/PACM16, MACM18/PACM18, 6I/6T/MACMI/MACMT/12, 6I/6T/612/MACMI/MACMT/MACM12, 6I/6T/614/MACMI/MACMT/MACM14, 6I/6T/616/MACMI/MACMT/MACM16, 6I/MACMI/MACMT, 6I/PACMI/PACMT, MACMI/MACMT/12, 6I/6T/MACMI, MACMI/MACM36, 12/PACMI, 12/MACMT, 6I/PACMT, 6/IPDT, MACM10, MACM12, MACM14, MACM16, MACM18, MACMI/12, PACM10, PACM12, MACM14, PACM16, PACM18, PACMI/12, TMDC10, TMDC12, TMDC16, TMDC18, MACMT/MACMI/12, PACMT/PACMI/12, oder Mischungen davon. Die amorphen teilaromatischen Polyamide von (A2) sind bevorzugt ausgewählt aus der Gruppe bestehend aus MXDI, MXDI/6I, MXD6/MXDI, 6I, 6/6I, 6T/6I, 10T/10I, 3-6T (3-6 = 2,2,4- bzw. 2,4,4-Trimethylhexandiamin) oder Mischungen davon, wobei die Systeme 6T/6I oder 10T/10I einen Anteil von weniger als 50 Mol-% 6T- bzw. 10T-Einheiten aufweisen, und wobei ein Zusammensetzungsbereich 6T:6I bzw. 10T/10I von 20:80 bis 45:55, insbesondere 25:75 bis 40:60 bevorzugt wird.

Die Diamine für die cycloaliphatischen Polyamide der Komponente (A2) sind dabei bevorzugt ausgewählt aus der Gruppe bestehend aus Bis-(4-amino-3-methyl-cyclohexyl)-methan (MACM), Bis-(4-amino-cyclohexyl)-methan (PACM), Bis-(4-amino-3-ethyl-cyclohexyl)-methan (EACM), Bis-(4-amino-3,5-dimethyl-cyclohexyl)-methan (TMDC), 2,6-Norbornandiamin (2,6-Bis-(aminomethyl)-norbornan), 1,3-Diaminocyclohexan, 1,4-Diaminocyclohexandiamin, Isophorondiamin, 1,3-Bis-(aminomethyl)cyclohexan, 1,4-Bis-(aminomethyl)cyclohexan, 2,2-(4,4'-Diaminodicyclohexyl)propan, meta-Xylylendiamin, para- Xylylendiamin und Mischungen daraus. Besonders bevorzugt sind die Diamine ausgewählt aus der Gruppe bestehend aus Bis-(4-amino-3-methyl-cyclohexyl)-methan (MACM) und Bis(4-amino-cyclohexyl)methan (PACM) und Mischungen hiervon.

Dicarbonsäuren für die cycloaliphatischen Polyamide Komponente (A2) sind bevorzugt ausgewählt aus der Gruppe bestehend aus Terephthalsäure, Isophthalsäure, Naphthalindicarbonsäuren (NDA), insbesondere 1,5-Naphthalindicarbonsäure und 2,6-Naphthalindicarbonsäure, 1,6-Hexandisäure, 1,9-Nonandisäure, 1,10-Decandisäure, 1,11-Undecandisäure, 1,12-Dodecandisäure, 1,13-Tridecandisäure, 1,14-Tetradecandisäure, 1,16-Hexadecandisäure, 1,18-Octadecandisäure, und Mischungen daraus. Besonders bevorzugt sind 1,6-Hexandisäure, 1,10-Decandisäure, 1,12-Dodecandisäure, Terephthalsäure, Isophthalsäure und Mischungen hiervon. Weiterhin sind Capro- und Laurinlactam bevorzugte Monomere für die Herstellung der cycloaliphatischen Polyamide der Komponente (A2).

Die Polyamide der Komponente (A2) verfügen bevorzugt über einen Glasübergangspunkt Tg oberhalb von 90°C, bevorzugt oberhalb von 110°C, insbesondere bevorzugt oberhalb von 120°C.

Erfindungsgemäss verfügt die Formmasse neben der Polyamid-Matrix über einen bestimmten Anteil von Polyethylenimin als **Komponente (B).** Bevorzugt liegt der Anteil der Komponente (B) im Bereich von 0.8-4.0 Gewichtsprozent, vorzugsweise im Bereich von 0.8-3.5 Gewichtsprozent in der Formmasse.

Unter Polyethyleniminen (PEI) im Sinne der vorliegenden Erfindung werden Polymere verstanden, in deren Hauptketten NH- oder N-Gruppen vorliegen, die voneinander jeweils durch zwei Methylen-Gruppen getrennt sind und wie sie beispielhaft sie in Encycl. Polym. Sci. Eng. 1, 680-739 beschrieben werden. Im Sinne der Erfindung werden sowohl Homoals auch Copolymerisate sowie deren Derivate umfasst. Bevorzugt werden verzweigte Polyethylenimine verwendet.

Die Homopolymerisate sind im Allgemeinen durch Polymerisation von Ethylenimin (Aziridin) in wässriger oder organischer Lösung in Gegenwart von säureabspaltenden Verbindungen, Säuren oder Lewis-Säuren erhältlich. Derartige Homopolymerisate sind verzweigte Polymere, die in der Regel primäre, sekundäre und tertiäre Aminogruppen im Verhältnis von ca. 30 % zu 40 % zu 30 % enthalten. Die Verteilung der Aminogruppen, bestimmt mittels ¹³C-NMR Spektroskopie, beträgt vorzugsweise für das Verhältnis von primären zu sekundären zu tertiären Aminogruppen im Bereich von 1:0.7:0.5 bis 1:1,5:1, insbesondere 1:0.8:0.6 bis 1:1.2:0.8.

Als Comonomere werden vorzugsweise Verbindungen eingesetzt, welche mindestens zwei Aminofunktionen aufweisen. Als geeignete Comonomere seien beispielsweise Alkylendiamine mit 2 bis 10 C-Atomen im Alkylenrest genannt, wobei Ethylendiamin und Propylendiamin bevorzugt sind. Weiterhin geeignete Comonomere sind Diethylentriamin, Triethylentetramin, Tetraethylenpentamin, Dipropylentriamin, Tripropylentriamin, Diehexamethylentriamin, Aminopropylethylendiamin und Bisaminopropylethylendiamin. Ebenso geeignete Polyethylenimine (PEI) im Sinne der Erfindung sind amidierte Polymerisate, die üblicherweise durch Umsetzung von Polyethyleniminen (PEI) mit Carbonsäuren, deren Ester oder Anhydride, Carbonsäureamide oder Carbonsäurehalogenide erhältlich sind.

Ausserdem eignen sich alkoxylierte Polyethylenimine (PEI), die beispielsweise durch Umsetzung von Polyethylenimin (PEI) mit Ethylenoxid und/oder Propylenoxid erhältlich sind. Auch derartige alkoxylierte Polymerisate sind anschliessend vernetzbar.

Als weitere geeignete erfindungsgemässe Polyethylenimine (PEI) seien hydroxylgruppenhaltige Polyethylenimine (PEI) und amphotere Polyethylenimine (PEI) (Einbau von anionischen Gruppen) genannt sowie lipophile Polyethylenimine (PEI), die in der Regel durch Einbau langkettiger Kohlenwasserstoffreste in die Polymerkette erhalten werden.

Polyethylenimine weisen üblicherweise ein gewichtsmittleres Molekulargewicht (Gewichtmittel) Mw von 600 bis 3'000'000, vorzugsweise 700 bis 2'000'000 auf. Das bevorzugte Mw beträgt 800 bis 50'000, insbesondere von 1'100 bis 25'000. Das gewichtsmittlere Molekulargewicht Mw wird bestimmt mittels Lichtstreuung gemäss gemäss ASTM D4001.

Das Polyethylenimin der Komponente (B) kann ein verzweigtes Polyethylenimin sein mit einer zahlenmittleren Molmasse Mn im Bereich von 500 - 50.000 oder 500 - 25.000 g/mol, vorzugsweise im Bereich von 1000 - 2500 oder 600-2000 g/mol.

Beim Polyethylenimin der Komponente (B) handelt es sich bevorzugt um ein verzweigtes Polyethylenimin, das insbesondere ein Verhältnis von primären zu sekundären Aminen im Bereich von 1:2-2:1 aufweist, vorzugsweise im Bereich von 1.2:1-1:1.2 und/oder ein Verhältnis von primären zu tertiären Aminen im Bereich von 3:1-1:1, vorzugsweise im Bereich von 2:1-1.4:1 und/oder ein Verhältnis von sekundären zu tertiären Aminen im Bereich von 3:1-1:1, vorzugsweise im Bereich von 2:1-1.2:1 aufweist.

Bevorzugt ist das Polyethylenimin der Komponente (B) ein verzweigtes Polyethylenimin mit einem Gehalt an primären Amino-Endgruppen im Bereich von 5000-20.000 µeq/g (mmol/kg), vorzugsweise im Bereich von 7.000-12.000 µeq/g (mmol/kg).

Beim Polyethylenimin der Komponente (B) handelt es sich weiterhin bevorzugt um ein verzweigtes Polyethylenimin mit einem Wassergehalt von weniger als 4 Gewichtsprozent, bevorzugt von weniger als 3 Gewichtsprozent, insbesondere bevorzugt von weniger als 2 Gewichtsprozent.

Zusätzlich enthält die vorgeschlagene Formmasse neben dem Polyamid und dem Polyethylenimin Zuschlagstoffe in Form von Füllstoffen und/oder Verstärkungsstoffen enthalten, und zwar als **Komponente (C).** Die Komponente (C) liegt in einem Anteil im Bereich von 5-60 Gewichtsprozent, vorzugsweise im Bereich von 30-50 Gewichtsprozent vor.

Dabei besteht die Komponente (C) aus:
(C1) 0-40 Gewichtsprozent, vorzugsweise 3-25 Gewichtsprozent, insbesondere bevorzugt 5-15 Gewichtsprozent partikulärer Füllstoff, insbesondere bevorzugt ausgewählt aus der Gruppe bestehend aus: Russ, Talk, Glimmer, Silikate, Quarz, Wollastonit, Kaolin, Kieselsäuren, Magnesiumcarbonat, Magnesiumhydroxid, Kreide, gemahlenes oder gefälltes Calciumcarbonat, Kalk, Feldspat, anorganische Pigmente, einschliesslich Bariumsulfat, Zinkoxid, Zinksulfid, Lithopone, Titandioxid (Rutil, Anatas), Eisenoxid, Eisenmanganoxid, Metalloxide, insbesondere Spinelle, einschliesslich Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente einschliesslich Titan-Zink-Rutil, Nickel-Antimon-Titanat, Chrom-Antimon-Titanat, hohlkugelige Silikatfüllstoffe, Aluminiumoxid, Bornitrid, Borcarbid, Aluminiumnitrid, Calciumfluorid und Mischungen hiervon;
(C2) 60-100 Gewichtsprozent, vorzugsweise 75-97 Gewichtsprozent, insbesondere bevorzugt 85-95 Gewichtsprozent faserförmiger Verstärkungsstoff, bevorzugt ausgewählt aus der Gruppe bestehend aus: Glasfasern, Kohlenstoffasern, Graphitfasern, Aramidfasern, Nanotubes oder Mischungen davon, wobei die Fasern der Komponente (C2) mit kreisförmiger oder nicht-kreisförmiger Querschnittsfläche vorliegen können,
wobei sich die Gewichtsprozent der Komponenten (C1) und (C2) auf 100 Gewichtsprozent der Komponente (C) ergänzen.

Weiterhin wird bevorzugt, wenn das Verhältnis der faserförmigen Zuschlagsstoffe (C2) zu den partikulären Zuschlagsstoffen (C1) im Bereich von 10:1 bis 1:1.5 oder im Bereich von 8:1 bis 1:1 liegt.

Die Füllstoffe C1 können auch oberflächenbehandelt sein.

Bevorzugtermassen verfügt die Komponente (C1) über eine mittlere Partikelgrösse (D50) im Bereich von 0.1-80 µm, bevorzugt im Bereich von 0.2-60 µm, insbesondere im Bereich von 10-60 µm. Bevorzugt wird eine Form der partikulären Füllstoffe, bei denen die Aspektverhältnisse L/b1 und L/b2 beide höchstens 10, insbesondere höchstens 5 sind, wobei die Aspektverhältnisse durch die Quotienten aus grösster Länge L des Teilchens zu dessen mittleren Breite b1 oder b2 beschrieben werden. Dabei liegen b1 und b2, die senkrecht zueinander angeordnet sind, in einer zur Länge L senkrechten Ebene.

Des weiteren bevorzugtermassen verfügt die Komponente (C1) über einen von null verschiedenen Absorptionskoeffizienten für UV-, VIS-oder IR-Strahlung, insbesondere für Laserstrahlung, bevorzugt bei einer Wellenlänge im Bereich von 1064 nm, bevorzugtermassen mit einer Absorptionsfähigkeit im sichtbaren und/oder infraroten Strahlungsbereich mit einem Absorptionskoeffizienten von wenigstens 0.05, bevorzugt wenigstens 0.1, und insbesondere bevorzugt wenigstens 0.2.

Besonders bevorzugt werden als Komponente (C1) anorganische Weisspigmente oder Russ, sowie Glimmer für verbesserte Oberflächeneigenschaften, verwendet. Insbesondere ist bevorzugt, dass Komponente (C1) ausschliesslich aus diesen Bestandteilen, bevorzugt ausschliesslich aus Russ und Glimmer, gebildet wird.

Bevorzugt ist Komponente (C2) eine Glasfaser, die im Wesentlichen aus den Komponenten Siliciumdioxid, Calciumoxid, Magnesiumoxid und Aluminiumoxid aufgebaut ist oder besteht und das Gewichtsverhältnis SiO₂/(CaO+MgO) kleiner 2.7, bevorzugt kleiner 2.5 und insbesondere zwischen 2.1 und 2.4 ist. Insbesondere handelt es sich bei Komponente C2 um eine E-Glasfaser gemäss ASTM D578-00.

Erfindungsgemäss kann es sich bei der Glasfaser (Komponente C2) auch um eine hochfeste Glasfaser handeln, die vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid beruht, wobei eine Zusammensetzung von 58-70 Gew.-% Siliciumdioxid (SiO₂), 15-30 Gew.-% Aluminiumoxid (Al₂O₃), 5-15 Gew.-% Magnesiumoxid (MgO), 0-10 Gew.-% Calciumoxid (CaO) und 0-2 Gew.-% weitere Oxide, wie z.B. Zirkoniumdioxid (ZrO₂), Boroxid (B₂O₃), Titandioxid (TiO₂) oder Lithiumoxid (Li₂O) bevorzugt wird. Die hochfeste Glasfaser besitzt bevorzugtermassen eine Zugfestigkeit von grösser oder gleich 4000 MPa, und/oder eine Reissdehnung von mindestens 5% und einen Zug-E-Modul von grösser 80 GPa. Konkrete Beispiele für diese hochfesten Glasfasern der Komponente (C2) sind S-Glasfasern von Owens Corning mit 910- oder 995-Schlichte, T-Glasfasern von Nittobo, HiPertex von 3B, HS4-Glasfasern von Sinoma Jinjing Fiberglass, R-Glasfasern von Vetrotex sowie S-1- und S-2-Glasfasern von AGY.

Die Glasfasern der Komponente (C2) können in Form von Kurzfasern, bevorzugt in Form von Schnittglas mit einer Länge im Bereich von 0.2 bis 20 mm, oder in Form von Endlosfasern (Rovings) vorliegen.

Die erfindungsgemässen Glasfasern der Komponente (C2) haben bevorzugt eine kreisförmige oder nicht-kreisförmige Querschnittsfläche.

Glasfasern mit kreisförmigem Querschnitt, also runde Glasfasern, haben typischerweise einen Durchmesser im Bereich von 5-20 µm, bevorzugt im Bereich von 6-17 µm und besonders bevorzugt im Bereich von 6-13 µm. Sie werden bevorzugt als Kurzglasfaser (Schnittglas mit einer Länge von 0.2 bis 20 mm, bevorzugt 2-12 mm) eingesetzt.

Bei den flachen Glasfasern der Komponente (C2), also Glasfasern mit nicht-kreisförmiger Querschnittsfläche, werden solche mit einem Abmessungsverhältnis von der Hauptquerschnittsachse zur senkrecht darauf stehender Nebenquerschnittsachse von mehr als 2 bevorzugt von 2 bis 8, insbesondere von 2 bis 5 bevorzugt eingesetzt. Diese sogenannten flachen Glasfasern weisen eine ovale, elliptische, mit Einschnürung(en) versehene elliptische (sogenannte Kokon- oder cocoon-Faser), polygonale, rechteckige oder nahezu rechteckige Querschnittsfläche auf. Ein weiteres kennzeichnendes Merkmal der eingesetzten flachen Glasfasern besteht darin, dass die Länge der Hauptquerschnittsachse bevorzugt im Bereich von 6 bis 40 µm, insbesondere im Bereich von 15 bis 30 µm und die Länge der Nebenquerschnittsachse im Bereich von 3 bis 20 µm, insbesondere im Bereich von 4 bis 10 µm liegt. Dabei weisen die flachen Glasfasern eine möglichst hohe Packungsdichte auf, d.h. die Querschnittsfläche der Glasfaser füllt ein gedachtes, den Glasfaserquerschnitt möglichst exakt umgebendes Rechteck zu mindestens 70%, bevorzugt mindestens 80% und insbesondere bevorzugt zu mindestens 85% aus.

Zur Verstärkung der erfindungsgemässen Formmassen können auch Mischungen von Glasfasern mit kreisförmigem und nicht-kreisförmigem Querschnitt verwendet werden, wobei der Anteil an flachen Glasfasern bevorzugtermassen überwiegt, d.h. mehr als 50 Gew.-% der Gesamtmasse der Fasern ausmacht.

Die erfindungsgemässen Glasfasern sind bevorzugtermassen mit einer für den jeweiligen Thermoplasten, insbesondere für Polyamid geeigneten Schlichte, beispielsweise enthaltend einen Haftvermittler auf Basis einer Amino- oder Epoxysilanverbindung, versehen.

Die gemäss einer weiteren bevorzugten Ausführungsform innerhalb der Komponente (C2) als Roving eingesetzten E-Glasfasern oder hochfesten Glasfasern weisen bevorzugt einen Durchmesser von 8 bis 20 µm, bevorzugt von 12 bis 18 µm auf, wobei der Querschnitt der Glasfasern rund, oval, elliptisch, elliptisch mit Einschnürung(en) versehen, polygonal, rechteckig oder nahezu rechteckig sein kann. Besonders bevorzugt werden sogenannte flache Glasfasern mit einem Verhältnis der Querschnittsachsen von 2 bis 5. Diese Endlosfasern, insbesondere bevorzugt innerhalb der Komponente (C2), werden in die erfindungsgemässen Polyamidformmassen durch bekannte Verfahren zur Herstellung von langfaserverstärktem Stäbchengranulat (Faserlänge und Granulatlänge sind identisch) eingearbeitet, insbesondere durch Pultrusionsverfahren, bei denen der endlose Faserstrang (Roving) mit der Polymerschmelze vollständig durchtränkt und anschliessend abgekühlt und geschnitten wird. Das auf diese Art und Weise erhaltene langfaserverstärkte Stäbchengranulat, das bevorzugt eine Granulatlänge von 3 bis 25 mm, insbesondere von 4 bis 12 mm aufweist, kann mit den üblichen Verarbeitungsverfahren (wie z. B. Spritzgiessen, Pressen) zu Formteilen weiterverarbeitet werden. Zur Verstärkung der erfindungsgemässen Formmassen können auch endlose Fasern (Langglasfasern) mit geschnittenen Fasern (Kurzglasfasern) kombiniert werden.

Zu guter Letzt kann die vorgeschlagene Formmasse auch noch Additive als Komponente (D) enthalten. Die Komponente (D) liegt bevorzugt in einem Anteil im Bereich von 0.1-4.0 Gewichtsprozent, vorzugsweise 0.2-2.0 Gewichtsprozent vor.

Die Additive der Komponente (D) sind ausgewählt aus der Gruppe bestehend aus: Stabilisatoren, Alterungsschutzmittel, Antioxidantien, Antiozonantien, Lichtschutzmittel, UV-Stabilisatoren, UV-Absorber, UV-Blocker, anorganische Hitzestabilisatoren auf Basis von Kupferhalogeniden und Alkalihalogeniden, organische Hitzestabilisatoren, Leitfähigkeitsadditive, optische Aufheller, Verarbeitungshilfsmittel, Nukleierungsmittel, Kristallisationsbeschleuniger, Kristallisationsverzögerer, Fliesshilfsmittel, Gleitmittel, Entformungsmittel, Weichmacher, organische Pigmente und Farbstoffe, Markierungsstoffe und Mischungen hiervon.

In einer bevorzugten Ausführungsform besteht die erfindungsgemässe thermoplastische Polyamid-Formmasse aus:
(A) 44.5-69.0 Gewichtsprozent der Komponente (A) bestehend aus:
   (A1) 20-100 Gewichtsprozent, vorzugsweise 40-60 Gewichtsprozent wenigstens eines aliphatischen teilkristallinen Polyamids gemäss Anspruch 1;
   (A2) 0-80 Gewichtsprozent, vorzugsweise 40-60 Gewichtsprozent wenigstens eines amorphen teilaromatischen Polyamids und/oder wenigstens eines cycloaliphatischen Polyamids,
   wobei sich die Gewichtsprozente der Komponenten (A1) und (A2) auf 100 Gewichtsprozent der Komponente (A) ergänzen;
(B) 0.8-3.5 Gewichtsprozent Polyethylenimin (PEI);
(C) 30-50 Gewichtsprozent Füll- und/oder Verstärkungsstoffe gemäss Anspruch 1;
(D) 0.2-2.0 Gewichtsprozent Additive gemäss Anspruch 1;
wobei die Summe gebildet aus (A)-(D) 100 % der thermoplastischen Polyamid-Formmasse ergibt.

In einer weiteren bevorzugten Ausführungsform besteht die erfindungsgemässe thermoplastische Polyamid-Formmasse aus:
(A) 44.5-69.0 Gewichtsprozent der Komponente (A) bestehend aus:
   (A1) 40-60 Gewichtsprozent wenigstens eines aliphatischen teilkristallinen Polyamids ausgewählt aus der Gruppe bestehend aus: 612, 614, 616 oder Mischungen davon;
   (A2) 40-60 Gewichtsprozent wenigstens eines amorphen teilaromatischen Polyamids ausgewählt aus der Gruppe bestehend aus: 6T/6I und/oder 10T/10I, jeweils mit einen Anteil von weniger als 50 Mol-% 6T- bzw. 10T-Einheiten, und/oder wenigstens eines cycloaliphatischen Polyamids ausgewählt aus der Gruppe bestehend aus: MACM12, PACM12, MACM12/PACM12, MACM14, MACM16 oder Mischungen davon,
   wobei sich die Gewichtsprozente der Komponenten (A1) und (A2) auf 100 Gewichtsprozent der Komponente (A) ergänzen;
(B) 0.8-3.5 Gewichtsprozent Polyethylenimin (PEI);
(C) 30-50 Gewichtsprozent Füll- und/oder Verstärkungsstoffe gemäss Anspruch 1;
(D) 0.2-2.0 Gewichtsprozent Additive gemäss Anspruch 1;
wobei die Summe gebildet aus (A)-(D) 100 % der thermoplastischen Polyamid-Formmasse ergibt.

In einer weiteren bevorzugten Ausführungsform besteht die erfindungsgemässe thermoplastische Polyamid-Formmasse aus:
(A) 32-94.4 Gewichtsprozent, vorzugsweise 44.5-69.0 Gewichtsprozent einer Mischung bestehend aus:
   (A1) 20-100 Gewichtsprozent, vorzugsweise 40-60 Gewichtsprozent wenigstens eines aliphatischen teilkristallinen Polyamids ausgewählt aus der Gruppe bestehend aus PA 612, PA 614, PA 616;
   (A2) 0-80 Gewichtsprozent, vorzugsweise 40-60 Gewichtsprozent wenigstens eines amorphen teilaromatischen Polyamids und/oder wenigstens eines cycloaliphatischen Polyamids ausgewählt aus der Gruppe bestehend aus PA 6I/6T, PA 10I/10T, MACM12, MACM14, MACM16;
   wobei sich die Gewichtsprozent der Komponenten (A1) und (A2) auf 100 Gewichtsprozent der Komponente (A) ergänzen.
(B) 0.8-4.0 Gewichtsprozent, vorzugsweise 0.8-3.5 Gewichtsprozent Polyethylenimin (PEI) oder Copolymere oder Derivate davon;
(C) 5-60 Gewichtsprozent, vorzugsweise 30-50 Gewichtsprozent Füll- und/oder Verstärkungsstoffe gemäss Anspruch 1;
(D) 0.1-4.0 Gewichtsprozent, vorzugsweise 0.2-2.0 Gewichtsprozent Additive gemäss Anspruch 1;
wobei die Summe gebildet aus (A)-(D) 100 % der thermoplastischen Polyamid-Formmasse ergibt.

Weiter betrifft die vorliegende Erfindung einen Verbund enthaltend wenigstens drei direkt aneinander grenzende und miteinander stoffschlüssig verbundene Schichten (I)-(III) folgender Art:
(I) Schicht aus einer Polyamid-Formmasse gemäss Anspruch 1 mit einem Gehalt von 0.1-5.0 Gewichtsprozent Polyethylenimin (PEI) oder eines Copolymeren oder Derivates davon;
(II) Polyurethan-Schicht;
(III) Schicht aus mineralischem Glas.

Ein solcher Verbund ist dadurch gekennzeichnet, dass die Schicht (I) aus einer Polyamid-Formmasse wie oben beschrieben gebildet wird.

Die Polyurethan-Schicht (II) basiert bevorzugt auf einem reaktiven Polyurethan (PU)-Klebstoffsystem, vorzugsweise auf einem 1K-Polyurethan-Klebstoff oder 2K-Polyurethan-Klebstoff, insbesondere bevorzugt auf Basis eines reaktiven Polyurethan-Schmelzklebers, der vorzugsweise feuchtigkeitsvernetzend ist.

Reaktive feuchtigkeitshärtende Schmelzklebstoffe haben in der industriellen Praxis eine weite Verbreitung gefunden und werden wie die thermoplastischen Schmelzklebstoffe aus der Schmelze aufgetragen. Nach dem Auftrag, dem Fügen der zu verbindenden Substrat-Teile und dem Abkühlen dieser Schmelze erfolgt zunächst eine rasche physikalische Abbindung des Schmelzklebstoffes durch dessen Erstarren. Daran schliesst sich bei den feuchtigkeitsreaktiven Schmelzklebstoffen eine chemische Reaktion der noch vorhandenen reaktiven Gruppen mit der Feuchtigkeit aus der Umgebung an, so dass ein vernetzter und unschmelzbarer Klebstoff entsteht.

Die reaktiven PU-Schmelzklebstoffe werden so gestaltet, dass sowohl die Anfangsfestigkeit durch das Erstarren als auch die Endfestigkeit durch die Feuchtigkeitsvernetzung so schnell wie möglich erfolgt, damit die gefügten Bauteile entweder weiterverarbeitet werden können oder endgültig in Gebrauch genommen werden können.

Die Klebstoffe können Lösemittel enthalten, bevorzugt sind sie jedoch frei von Lösemitteln. Die Vernetzung der erfindungsgemässen geeigneten Polyurethan-Klebstoffe beruht auf der Umsetzung von reaktiven NCO-Gruppen mit H-aciden funktionellen Gruppen, beispielsweise OH-Gruppen, Aminogruppen oder Carboxylgruppen. Eine alternative Vernetzungsmethode besteht darin, dass die NCO-Gruppen mit Feuchtigkeit aus dem aufgetragenen Klebstoff, dem Substrat, oder der Umgebung unter Bildung von Harnstoffgruppen reagieren. Zur Beschleunigung solcher Reaktionen können Katalysatoren in den Klebstoff eingebracht werden, beispielsweise Amin-, Titan- oder Zinnkatalysatoren. In bevorzugten Ausführungsformen ist der Klebstoff ein 1K-Polyurethan-Klebstoff. Ein solcher kann als Harzkomponente mindestens ein NCO-terminiertes Polyurethanpräpolymer enthalten und härtet durch Reaktion der NCO-Gruppen mit Feuchtigkeit aus dem aufgetragenen Klebstoff, dem Substrat, oder der Umgebung aus.

Die Isocyanat (NCO)-terminierten Polyurethan-Präpolymere der Harzkomponente werden durch Umsetzen eines Polyols oder einer Polyolmischung mit einem stöchiometrischen Überschuss von Polyisocyanat erhalten. Die bei der Herstellung des Präpolymers eingesetzten Polyole können alle üblicherweise für die Polyurethansynthese eingesetzten Polyole, beispielsweise Polyesterpolyole, Polyetherpolyole, Polyesteretherpolyole, Polycarbonatpolyole oder Mischungen von zwei oder mehr der genannten sein.

Polyetherpolyole können aus einer Vielzahl von Alkoholen hergestellt werden, die eine oder mehrere, primäre oder sekundäre Alkoholgruppen enthalten, wie z.B.: Ethylenglykol, Propylenglykol, Glycerin, Butandiol, Butantriol, Trimethylolethan, Pentaerythrit, Hexandiol, 3-Hydroxyphenol, Hexantriol, Trimethylolpropan, Oktandiol, Neopentylglykol, 1,4-Hydroxymethylcyclohexan, Bis(4-hydroxyphenyl) dimethylmethane und Sorbit. Als cyclische Ether zur Herstellung von vorstehend beschriebenen Polyethern kommen Alkylenoxide wie Ethylenoxid, Propylenoxid, Butylenoxid, Epichlorhydrin, Styroloxid oder Tetrahydrofuran oder Gemische aus diesen Alkylenoxiden in Betracht.

Polyesterpolyole können beispielsweise durch Umsetzung von niedermolekularen Alkoholen, insbesondere von Ethylenglykol, Diethylenglykol, Neopentylglykol, Hexandiol, Butandiol, Propylenglykol, Glycerin oder Trimethylolpropan mit Caprolacton hergestellt werden. Ebenfalls als polyfunktionelle Alkohole zur Herstellung von Polyesterpolyolen geeignet sind 1,4-Hydroxymethylcyclohexan, 2-Methyl-1,3-propandiol, 1,2,4-Butantriol, Triethylenglykol, Tetraethylenglykol, Polyethylenglykol, Dipropylenglykol, Polypropylenglykol, Dibutylenglykol und Polybutylenglykol. Weitere geeignete Polyesterpolyole sind durch Polykondensation herstellbar. So können difunktionelle und/oder trifunktionelle Alkohole mit einem Unterschuss an Dicarbonsäuren oder Tricarbonsäuren oder Gemischen aus Dicarbonsäuren oder Tricarbonsäuren, oder deren reaktiven Derivaten, zu Polyesterpolyolen kondensiert werden. Geeignete Dicarbonsäuren sind beispielsweise Adipinsäure oder Bernsteinsäure oder Dodekandisäure und ihre höheren Homologen mit bis zu 16 C-Atomen, ferner ungesättigte Dicarbonsäuren wie Maleinsäure oder Fumarsäure sowie aromatische Dicarbonsäuren, insbesondere die isomeren Phthalsäuren, wie Phthalsäure, Isophthalsäure oder Terephthalsäure. Als Tricarbonsäuren sind beispielsweise Zitronensäure oder Trimellithsäure geeignet. Die genannten Säuren können einzeln oder als Gemische aus zwei oder mehr davon eingesetzt werden.

Polycarbonatpolyole können beispielsweise durch die Reaktion von Diolen, wie Propylenglykol, Butandiol-1,4 oder Hexandiol-1,6, Diethylenglykol, Triethylenglykol oder Tetraethylenglykol oder Gemischen dieser Diole mit Diarylcarbonaten, beispielsweise Diphenylcarbonaten, oder Phosgen, erhalten werden.

Das Molekulargewicht der zur Synthese des Präpolymers verwendeten Polyole liegt vorzugsweise im Bereich von 100 bis 20'000 g/mol, insbesondere 300 bis 5'000 g/mol. Die mittlere Funktionalität kann im Bereich von 2 bis 4.5 liegen. Das PU-Präpolymer weist vorzugsweise ein Polyether/Polyester-Backbone auf.

Der stöchiometrische Überschuss von Polyisocyanat beträgt bezogen auf das molare Verhältnis von NCO- zu OH-Gruppen insbesondere 1:1 bis 2.5:1, vorzugsweise 1:1 bis 2:1 und besonders bevorzugt 1.05:1 bis 1.8:1.

Als Polyisocyanate können Polyisocyanate mit zwei oder mehr lsocyanat-Gruppen eingesetzt werden. Geeignete Polyisocyanate sind beispielsweise 1,5-Naphthylendiisocyanat (NDI), 2,4- oder 4,4'-Diphenylmethandiisocyanat (MDI), hydriertes MDI (H12MDI), Xylylendiisocyanat (XDI), Tetramethylxylylendiisocyanat (TMXDI), und Tetraalkylendiphenylmethandiisocyanat, 4,4'-Dibenzyldiisocyanat, 1,3- oder 1,4-Phenylendiisocyanat, Toluylendiisocyanats (TDI), 1-Methyl-2,4-diisocyanato-cyclohexan, 1,6-Diisocyanato-2,2,4-trimethylhexan, 1,6-Diisocyanato-2,4,4-trimethylhexan, 1-Isocyanatomethyl-3-isocyanato-1,5,5-trimethylcyclohexan (IPDI), Tetramethoxybutan-1,4-diisocyanat, Butan-1,4-diisocyanat, Hexan-1,6-diisocyanat (HOI), Dicyclohexylmethandiisocyanat, Cyclohexan-1,4-diisocyanat, Ethylen-diisocyanat, Methylentriphenyltriisocyanat (MIT), Phthalsaure-bis-isocyanato-ethylester, Trimethylhexamethylendiisocyanat, 1,4-Diisocyanatobutan, 1,12-Diisocyanatododecan und Dimerfettsäurediisocyanat.

Als mindestens trifunktionelle Isocyanate geeignet sind Polyisocyanate, die durch Trimerisation oder Oligomerisation von Diisocyanaten oder durch Reaktion von Diisocyanaten mit niedermolekularen, polyfunktionellen hydroxyl- oder aminogruppenhaltigen Verbindungen entstehen. Kommerzielle erhältliche Beispiele sind Trimerisierungsprodukte der Isocyanate HOI, MDI oder IPDI oder Addukte aus Diisocyanaten und niedermolekularen Triolen, wie Trimethylolpropan oder Glycerin. Weitere Beispiele sind Isocyanurate des Hexamethylendiisocyanates (HOI) und Isocyanurate des Isophorondiisocyanats (IPDI).

Es können aliphatische, cycloaliphatische oder aromatische Isocyanate eingesetzt werden, insbesondere sind aufgrund der Reaktivität jedoch aromatische Diisocyanate geeignet. Beispiele für geeignete Diisocyanate sind Methylendiphenyldiisocyanate (MDI), wie 4,4'-Methylendiphenyldiisocyanat, 2,4'-Methylendiphenyldiisocyanat oder 2,2'-Methylendiphenyldiisocyanat.

Aus den oben erwähnten Polyolen und den Polyisocyanaten können auf bekannte Art und Weise PU-Präpolymere hergestellt werden. Dabei kann aus den Polyolen und den Isocyanaten ein NCO-Gruppen-haltiges Präpolymer hergestellt werden. Beispiele dafür sind in der EP-A951493, EPA1341832, EP-A 150444, EP-A 1456265, WO 2005/097861 beschrieben. Vorzugsweise handelt es sich bei den PU-Präpolymeren um ein aromatisch Isocyanat-terminiertes, noch bevorzugter MDI-terminiertes Polyurethan-Präpolymer aus einer Polyesterpolyolmischung und einem aromatischen Diisocyanat, wie MDI.

Die entsprechenden Präpolymere weisen üblicherweise einen NCO-Gehalt von 0,25 bis 5.0 Gew.-% (bestimmt nach DIN EN ISO 11909:2007-05) auf, vorzugsweise 0,25 bis 4.0 Gew.-%, und haben eine mittlere NCO-Funktionalitat von 2 bis 3, insbesondere 2.

Das Molekulargewicht (Mn) des Präpolymers liegt im Bereich von 300 bis 20.000 g/mol, vorzugsweise kleiner als 12.000, insbesondere weniger als 8.000 g/mol.

Die beschriebenen Klebstoffsysteme enthalten die vorstehend beschriebenen Präpolymere vorzugsweise in Mengen von 50 bis 99 Gew.-%, noch bevorzugter in Mengen von 75 bis 98 Gew.-% bezogen auf das Gesamtgewicht der Klebstoffzusammensetzung. Die Schmelzklebstoffe können ferner mindestens ein weiteres thermoplastisches Polymer, insbesondere einen thermoplastischen Polyester enthalten. Dabei liegt das zahlenmittlere Molekulargewicht des thermoplastischen Polyesters bevorzugt unter 6000 g/mol.

Weiterhin können in dem erfindungsgemässen Klebstoff die üblichen Additive enthalten sein. Bei den weiteren Bestandteilen handelt es sich beispielsweise um klebrig machende Harze (Tackifier), Haftvermittler, Vernetzungsmittel oder Viskositätsregler, Pigmente, Weichmacher, Stabilisatoren und/oder Katalysatoren, Wachse oder Antioxidantien. lnsgesamt können die Additive bis zu 25 Gew-% im Klebstoff enthalten sein.

ssSolche geeignete Polyurethan-Klebstoffsysteme sind als sogenannte H.B. Fuller PU reactive hot melt Systeme von H.B. Fuller , USA, erhältlich.

Die Polyurethan-Schicht (II) kann also bevorzugt auf Basis eines 1K-Polyurethan-Schmelzklebstoffsystems, das feuchtigkeitsvernetzend ist, ausgebildet sein.

Bevorzugt beruht die Polyurethan-Schicht (II) auf einem vernetzten System, vorzugsweise einem chemisch und/oder physikalisch vernetzten, insbesondere feuchtigkeitsvernetzten oder elektromagnetisch vernetzten System.

Bei der Schicht (III) des Verbundes handelt es sich um ein mineralisches Glas.

In einer bevorzugten Ausführungsform weist das mineralische Glas einen Brechungsindex von 1.50 bis 1.53 auf und beruht vorzugsweise auf dem ternären System Siliciumdioxid-Aluminiumoxid-Magnesiumoxid oder auf dem quaternären System Siliciumdioxid-Aluminiumoxid-Magnesiumoxid-Calciumoxid, wobei eine Zusammensetzung von 58 bis 70 Gew.-% Siliciumdioxid (SiO₂), 15 bis 30 Gew.-% Aluminiumoxid (Al₂O₃), 5 bis 15 Gew.-% Magnesiumoxid (MgO), 0 bis 10 Gew.-% Calciumoxid (CaO) und 0 bis 7 Gew.-% weitere Oxide, wie z.B. Zirkoniumdioxid (ZrO₂), Boroxid (B₂O₃), Titandioxid (TiO₂), Eisenoxid (Fe₂O₃), Natriumoxid, Kaliumoxid oder Lithiumoxid (Li₂O) bevorzugt wird.

Insbesondere handelt es sich um ein Abdeckglas für Touchscreens tragbarer elektronischer Geräte. Besonders bevorzugt ist Gorilla-Glas (Gorilla Glass, Corning, USA) ein dünnes chemisch vorgespanntes Glas aus der Gruppe der Alkalialumosilikatgläser. Das Glas mit einer bevorzugten Dicke zwischen 0,4 und 2 mm zeichnet sich durch eine hohe Bruch- und Kratzfestigkeit aus. Dies wird erreicht, indem durch einen Ionenaustauschprozess in einer etwa 400 °C heissen Kaliumsalzschmelze in den oberflächennahen Glasschichten Natriumdurch Kaliumionen ersetzt und damit eine oberflächliche Druckspannung eingebracht wird, die ein Risswachstum erschwert. Während normales Glas bei einer Punktlast von 5 Newton Risse zeigt, tritt dies bei Gorilla-Glas erst bei Lasten von über 40 Newton auf. Ähnlich verhält es sich mit der Kratzfestigkeit. Nach Herstellerangaben soll das Produkt etwa doppelt bis dreimal so kratzfest sein wie herkömmliches Glas. Ähnliche Gläser bieten Asahi Glass und Schott unter den Markennamen Dragontrail bzw. Xensation Cover an. Diese beiden Produkte bestehen ebenfalls aus Alkalialumosilikatglas.

Weiter betrifft die vorliegende Erfindung die Verwendung einer thermoplastischen Formmasse, wie sie oben beschrieben wurde, zur Herstellung eines derartigen Verbundes. Zudem betrifft die vorliegende Erfindung ein Verfahren zur Herstellung eines derartigen Verbundes, wobei ein Polyamid mit einem Polyethylenimin (PEI) oder einem Copolymeren oder Derivat davon, sowie gegebenenfalls faserförmigen Verstärkungsstoffen und partikulären Zuschlagstoffen vermischt wird, vorzugsweise zu einem Polyamid wie oben beschrieben, dieses Material in einem Spritzgussverfahren oder Extrusionsverfahren zu einem Formteil verarbeitet wird, und dieses Formteil als Schicht (I) über eine Schicht (II) Polyurethan-Klebstoff in Kontakt mit einer Schicht (III) aus mineralischem Glas gebracht wird, und anschliessend die Schicht (II) ausgehärtet wird, vorzugsweise indem die Schicht (II) vernetzt wird, vorzugsweise unter Einwirkung von Feuchtigkeit und/oder Einwirkung von elektromagnetischen Wellen.

Zu guter letzt betrifft die vorliegende Erfindung die Verwendung von Polyethylenimin (PEI) oder eines Copolymeren oder Derivates davon in einer Polyamid-Formmasse zur Verbesserung der Verbundhaftung zu Polyurethan, bevorzugt zur Ausbildung eines Verbundes wie oben beschrieben. Auch hier ist das Polyethylenimin bevorzugt in der Polyamid-Formmasse in einem Anteil im Bereich von 0.5-4.0 Gewichtsprozent, vorzugsweise im Bereich von 0.8-3.5 Gewichtsprozent in der Formmasse, bezogen auf das Gesamtgewicht der Polyamid-Formmasse, vorhanden, und es handelt sich bevorzugt beim Polyethylenimin um ein verzweigtes Polyethylenimin, das vorzugsweise ein Verhältnis von primären zu sekundären Aminen im Bereich von 1:2-2:1 aufweist, vorzugsweise im Bereich von 1.2:1-1:1.2 und/oder ein Verhältnis von primären zu tertiären Aminen im Bereich von 3:1-1:1, vorzugsweise im Bereich von 2:1-1.4:1 und/oder ein Verhältnis von sekundären zu tertiären Aminen im Bereich von 3:1-1:1, vorzugsweise im Bereich von 2:1-1.2:1 aufweist. Das Polyethylenimin ist weiter bevorzugt ein verzweigtes Polyethylenimin mit einer zahlenmittleren Molmasse Mₙ im Bereich von 500-50.000 oder 500 - 25.000 g/mol, vorzugsweise im Bereich von 600-2000 oder 1000 - 2500 g/mol.

Das Polyethylenimin kann bevorzugt die weiteren anderen Eigenschaften aufweisen, die weiter oben im Zusammenhang mit der thermoplastischen Polyamid-Formmasse bereits beschrieben wurden.

Weitere Ausführungsformen sind in den abhängigen Ansprüchen angegeben.

### KURZE BESCHREIBUNG DER ZEICHNUNGEN

Bevorzugte Ausführungsformen der Erfindung werden im Folgenden anhand der Zeichnungen beschrieben, die lediglich zur Erläuterung dienen und nicht einschränkend auszulegen sind. In der Zeichnung zeigt:

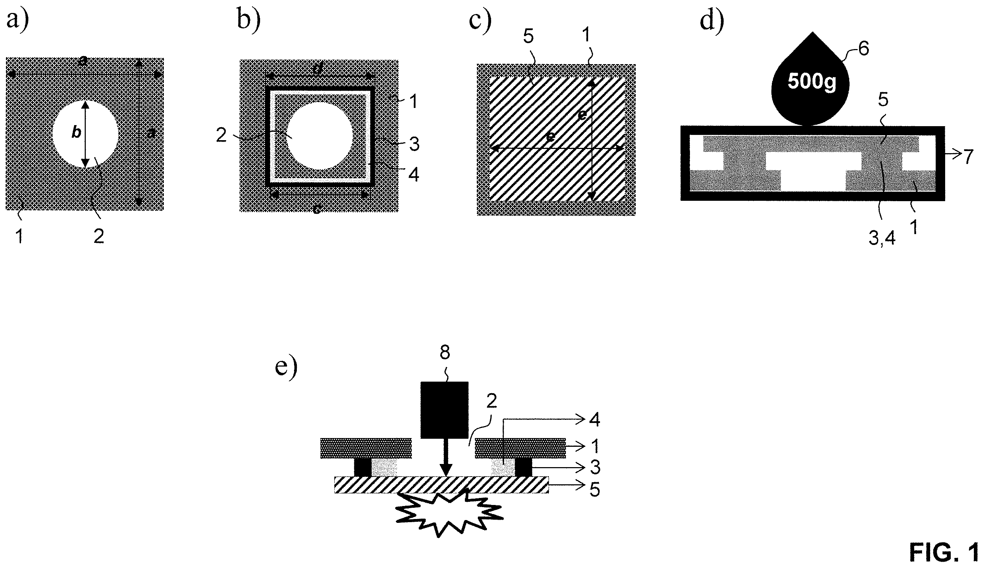

- Fig. 1: die verschiedenen Phasen des Versuchsaufbaus für die Messung der Adhäsion.

### BESCHREIBUNG BEVORZUGTER AUSFÜHRUNGSFORMEN

Die in der Tabelle 1 angegebenen Komponenten wurden in den in den in den Tabellen 2 und 3 angegebenen Proportionen in einem zweiwelligen Extruder der Firma Werner und Pfleiderer mit einem Schneckendurchmesser von 25 mm bei vorgegebenen Prozessparametern (siehe Tabelle 4) compoundiert, wobei die Polyamidgranulate sowie die Zusatzstoffe in die Einzugszone dosiert wurden, während die Glasfaser über einen Sidefeeder 3 Gehäuseeinheiten vor der Düse in die Polymerschmelze dosiert wurde. Die Compounds zusammengefasst in Tabelle 2 und 3 wurden als Strang aus einer Düse mit 3 mm Durchmesser abgezogen und nach Wasserkühlung granuliert. Das Granulat wurde 24 Stunden bei 100°C im Vakuum von 30 mbar getrocknet.

**Tabelle 1: In den Beispielen und Vergleichsbeispielen verwendete Materialien**

| **Komponenten** | **Beschreibung** | **Hersteller** |
|---|---|---|
| Polyamid 1 | PA 612, ηᵣₑₗ. = 1,78, Tm = 215 °C, AG = 21 µeq/g | EMS-CHEMIE AG |
| Polyamid 1A | PA 612, ηᵣₑₗ. = 1.45, AG = 210 µeq/g | EMS-CHEMIE AG |
| Polyamid 2 | PA 616, ηᵣₑₗ. = 1.94 , Tm = 195 °C, AG = 32 µeq/g | EMS-CHEMIE AG |
| Polyamid 3 | PA 6I/6T (67:33), η_{rel.} = 1,52 , T_{g} = 125 °C, AG = 45 µeq/g | EMS-CHEMIE AG |
| Polyamid 4 | PA 6I/6T (67:33), η_{rel.} = 1.41, T_{g} = 122 °C, AG = 287 µeq/g | EMS-CHEMIE AG |
| Polyamid 5 | PA MACM16, η_{rel.} = 1,75 , T_{g} = 140 °C, AG = 34 µeq/g | EMS-CHEMIE AG |
| Polyamid 6 | PA 6, η*ᵣₑₗ. = 2.70 (1 % in Schwefelsäure), Tₘ = 222 °C, AG = 23 µeq/g | EMS-CHEMIE AG |
| Glasfaser | Vetrotex 995 EC10-4.5, E-Glas, Durchmesser = 10 µm, Länge = 4.5 mm, runder Querschnitt | Owens Corning Fiberglass (US) |
| Russ | Black Pearls 1100, Iodine absorption (g/kg) 20, OAN (cc/100g): 105 (ASTM D-2414) | Cabot Corp. (CH) |
| Glimmer | Mica HLM 100; Muskovit Glimmer, Dichte: 2.8 g/cm³; mittlerer Durchmesser: 50 µm (d50), 315 µm (d98); Aspektverhältnis: 40:1 | Kärntner Montanindustrie (AT) |
| PEI | Lupasol G20, Polyethylenimin (CAS 25987-06-8), zahlenmittlere Molmasse Mₙ = 1200 g/mol, Wassergehalt höchstens 2 Gewichtsprozent, Verhältnis primäre/sekundäre/tertiäre Amine 1:0.91:0.64 | BASF SE (DE) |
| Stabilisierung | Mischung aus Irganox 1010 (CAS 6683-19-8), Anox 20 (CAS 6683-19-8) und Hostanox PAR24 (CAS 31570-04-4) im Verhältnis 7:3:3 | BASF SE Addivant Clariant Int. Ltd. |
| ηᵣₑₗ | Relative Viskosität bestimmt gemäss ISO 306, 0.5 g Polymergranulat in 100 ml m-Kresol, 20°C, für Polyamide 1 bis 5 | |
| η*ᵣₑₗ | Relative Viskosität bestimmt gemäss ISO 306, Schwefelsäure, 1.0 Gew.-%, 20°C, für Polyamid 6 | |
| AG | Konzentration der Aminoendgruppen in [µeq/g] | |
| T_{g}, Tₘ, | Glasübergangstemperatur, Schmelztemperatur bestimmt gemäss ISO 11357 mit einer Aufheizrate von 20 °C/min | |

**Tabelle 2 : Formmassen nach der Erfindung**

| **Komponenten** | **Einheit** | **B1** | **B2** | **B3** | **B4** | **B5** | **B6** | **B7** | **B8** |
|---|---|---|---|---|---|---|---|---|---|
| Polyamid 1 (Komponente A1) | Gew.-% | 28.79 | 28.04 | 28.99 | 57.58 | 43.20 | 28.04 | 28.04 | |
| Polyamid 2 (Komponente A1) | Gew.-% | | | | | | | | 28.79 |
| Polyamid 3 (Komponente A2) | Gew.-% | 28.79 | 28.04 | 28.99 | | 14.38 | | | |
| Polyamid 4 (Komponente A2) | Gew.-% | | | | | | 28.04 | 28.04 | |
| Polyamid 5 (Komponente A2) | Gew.-% | | | | | | | | 28.79 |
| Stabilisator | Gew.-% | 0.42 | 0.42 | 0.42 | 0.42 | 0.42 | 0.42 | 0.42 | 0.42 |
| Russ | Gew.-% | 0.50 | 0.50 | 0.50 | 0.50 | 0.50 | 0.70 | 0.50 | 0.50 |
| Glimmer | Gew.-% | 5.00 | 5.00 | 5.00 | 5.00 | 5.00 | 4.80 | 5.00 | 5.00 |
| Glasfaser | Gew.-% | 35.00 | 35.00 | 35.00 | 35.00 | 35.00 | 35.00 | 35.00 | 35.00 |
| PEI | Gew.-% | 1.50 | 3.00 | 1.10 | 1.50 | 1.50 | 1.50 | 3.00 | 1.50 |

| **Eigenschaften** | | | | | | | | | |
|---|---|---|---|---|---|---|---|---|---|
| Amino-EG | µeq/g | 220 | 395 | 165 | 228 | 217 | 297 | 472 | 229 |
| E-Modul | MPa | 12200 | 12100 | 12200 | 12000 | 11900 | 12200 | 11800 | 11000 |
| Bruchspannung | MPa | 181 | 170 | 176 | 180 | 176 | 180 | 167 | 152 |
| Bruchdehnung | % | 2.2 | 2.1 | 2.2 | 2.5 | 2.4 | 2.3 | 2.1 | 5.3 |
| Schlagzähigkeit, Charpy, 23°C | kJ/m² | 47 | 32 | 55 | 65 | 56 | 47 | 38 | 51 |
| Kerbschlagzähigkeit , Charpy, 23°C | kJ/m² | 8 | 7 | 9 | 10 | 8 | 8 | 7 | 10 |
| Verbundhaftung | mJ | 996 | 1013 | 915 | 654 | 915 | 1013 | 1078 | 817 |

**Tabelle 3: Formmassen der Vergleichsbeispiele**

| **Komponenten** | **Einheit** | **VB1** | **VB2** | **VB3** | **VB4** | **VB5** |
|---|---|---|---|---|---|---|
| Polyamid 1 | Gew.-% | 29.54 | 59.08 | | | |
| Polyamid 1A | Gew.-% | | | | 29.54 | |
| Polyamid 3 | Gew.-% | 29.54 | | 59.08 | | |
| Polyamid 4 | Gew.-% | | | | 29.54 | |
| Polyamid 6 | Gew.-% | | | | | 67.51 |
| Stabilisator | Gew.-% | 0.42 | 0.42 | 0.42 | 0.42 | 0.14 |
| Russ | Gew.-% | 0.50 | 0.50 | 0.50 | 0.50 | |
| Glimmer | Gew.-% | 5.00 | 5.00 | 5.00 | 5.00 | |
| Glasfaser | Gew.-% | 35.00 | 35.00 | 35.00 | 35.00 | 30.0 |
| PEI | Gew.-% | | | | | 2.00 |
| Calciummontanat | Gew.-% | | | | | 0.35 |

| **Eigenschaften** | | | | | | |
|---|---|---|---|---|---|---|
| Amino-EG | µeq/g | 27 | 24 | 30 | 242 | 33 |
| E-Modul | MPa | 11540 | 11300 | 12000 | 12500 | 9600 |
| Bruchspannung | MPa | 189 | 180 | 195 | 151 | 161 |
| Bruchdehnung | % | 3.0 | 3.5 | 2.5 | 1.1 | 2.5 |
| Schlagzähigkeit, Charpy, 23°C | kJ/m² | 68 | 85 | 47 | 12 | 45 |
| Kerbschlagzähigkeit, Charpy, 23°C | kJ/m² | 9 | 12 | 8 | 5 | 8 |
| Verbundhaftung | mJ | 327 | 229 | 327 | 423 | 457 |

**Tabelle 4: Prozessparameter Compoundierung**

| **Parameter** | **Temperaturprofil [°C]** |
|---|---|
| Temperatur Zone 1 | 80-100 |
| Temperatur Zone 2 | 230-250 |
| Temperatur Zone 3 bis 10 | 250-260 |
| Temperatur Zone 11 | 250-270 |
| Temperatur Zone 12 | 230-270 |
| Temperatur Düsenkopfes | 260-280 |
| Schmelzetemperatur | 250-280 |
| Durchsatz [kg/h] | 8-12 |
| Schneckendrehzahl [U/min] | 150-200 |

Die Compounds wurden mit einer Spritzgussmaschine Arburg Allrounder 320-210-750 zu Probekörpern bei definierten Zylindertemperaturen der Zonen 1 bis 4 von 240 bis 280 °C und einer Werkzeugtemperatur von 100 °C verspritzt.

### Messmethoden

Im Rahmen dieser Anmeldung wurden die folgenden Messmethoden verwendet:

### Schmelzpunkt (Tm) und Schmelzenthalpie (ΔHm):

Der Schmelzpunkt und Schmelzenthalpie wurden nach ISO 11357-3 (2013) am Granulat bestimmt. Die DSC (Differential Scanning Calorimetry) Messungen wurden mit einer Aufheizrate von 20 K/min durchgeführt.

### Glasübergangstemperatur, Tg:

Die Bestimmung der Glasübergangstemperatur T_{g} erfolgte nach ISO 11357-2 (2013) an Granulat mittels Differential Scanning Calorimetry (DSC). Diese wurde bei jeder der beiden Aufheizungen mit einer Aufheizrate von 20 K/min durchgeführt. Nach der ersten Aufheizung wurde die Probe in Trockeneis abgeschreckt. Die Glasübergangstemperatur (T_{g}) wurde bei der zweiten Aufheizung bestimmt. Der Mittelpunkt des Glasübergangbereichs, welcher als Glasübergangstemperatur angegeben wurde, wurde nach der Methode "Half Height" ermittelt.

### Relative Viskosität, ηᵣₑₗ:

Die relative Viskosität wurde gemäss ISO 307 (2007) bei 20°C bestimmt. Dazu wurden 0,5 g Polymergranulat in 100 ml m-Kresol (soweit nicht anders angegeben) eingewogen, die Berechnung der relativen Viskosität (RV) nach RV = t/t₀ erfolgte in Anlehnung an Abschnitt 11 der Norm.

### Zug E-Modul:

Die Bestimmung des Zug-E-Moduls wurde gemäss ISO 527 (2012) bei 23°C mit einer Zuggeschwindigkeit von 1 mm/min an einem ISO-Zugstab (Typ A1, Masse 170 x 20/10 x 4) hergestellt gemäss der Norm: ISO/CD 3167 (2003), durchgeführt.

### Bruchspannung und Bruchdehnung:

Die Bestimmung von Bruchspannung und Bruchdehnung wurden gemäss ISO 527 (2012) bei 23°C mit einer Zuggeschwindigkeit von 5 mm/min an einem ISO-Zugstab, Typ A1 (Masse 170 x 20/10 x 4 mm), hergestellt gemäss der Norm ISO/CD 3167 (2003), durchgeführt.

### Schlagzähigkeit nach Charpy:

Die Bestimmung der Schlagzähigkeit nach Charpy wurde gemäss ISO 179/2*eU (1997, * 2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Kerbschlagzähigkeit nach Charpy:

Die Bestimmung der Kerbschlagzähigkeit nach Charpy wurde gemäss ISO 179/2*eA (1997, * 2 = instrumentiert) bei 23°C an einem ISO-Prüfstab, Typ B1 (Masse 80 x 10 x 4 mm), hergestellt gemäss der Norm ISO/CD 3167 (2003), durchgeführt.

### Verbundhaftung:

Zur Messung der Verbundhaftung wurde nach folgendem Schema vorgegangen: Ein quadratischer Probekörper 1 einer Seitenlänge a von 50 mm mit einer Dicke von 3.5 mm sowie einer zentralen kreisrunden Durchgangsöffnung 2 mit einem Durchmesser b von 10 mm wurde wie oben angegeben im Spritzguss hergestellt (vergleiche Figur 1a). Anschliessend wurde (vergleiche Figur 1b) mit einem Tape-Streifen einer Dicke von 240 µm eine quadratische Bahn 3 mit einer äusseren Weite d von 17 mm und einer inneren Weite c von 14 mm abgeklebt. Anschliessend wurde auf der Innenseite dieser Bahn ein Streifen 4 einer Breite von 1 mm aus PU-Schmelzkleber des Typs EH9651 von H.B. Fuller ebenfalls in einer Dicke von 240 µm warm aufgetragen, und anschliessend (vergleiche Figur 1c) eine quadratische Scheibe 5 aus mineralischem Glas (Gorilla Glass 5. Corning) mit einer Seitenlänge e von 20 mm und einer Dicke von 3 Millimeter aufgelegt, unter Zuhilfenahme einer Schablone. Anschliessend wurde der Verbund während 2 Stunden unter Anlegen einer Last 6 von 500 g bei 23° und 50 % relativer Feuchtigkeit getrocknet respektive der PU Kleber vernetzt (vergleiche Figur 1 d).

Die Messung der Adhäsion erfolgte in einem Aufbau gemäss Figur 1 e), wobei ein metallischer, zylinderförmiger Fallkörper 8 mit einem Durchmesser von 7 mm je nach Messung von 50 g, 100 g, 120-220 g Gewicht aus einer zunehmenden Höhe im Bereich von 50-500 mm kontrolliert durch die Öffnung 2 auf die Glasscheibe 5 fallen gelassen wurde, bis sich der Verbund löste; die kinetische Energie des Fallkörpers 8 beim Aufprall beim letzten schadlosen Fallversuch wurde als Wert für die Verbundhaftung aufgenommen.

### Amino-Endgruppenkonzentration:

Für die Bestimmung der Aminoendgruppen wird das Polyamid in m-Kresol heiss gelöst und mit Isopropanol versetzt (m-Kresol:Isopropanol=2:1 volumetrisch). Der Gehalt an Aminoendgruppen wird durch potentiometrische Titration mit Perchlorsäure ermittelt.

### Diskussion der Resultate:

Aus den Messwerten ist folgendes erkennbar: wird ohne Polyethylenimin in der Polyamid-Matrix gearbeitet (vergleiche VB1-VB3) resultieren zwar gute mechanische Werte aber eine schlechte Verbundhaftung. Dies lässt sich nicht dadurch lösen, indem als Polyamid-Matrix ein Polyamid mit einer erhöhten Amino-Endgruppen-Konzentration eingesetzt wird (vergleiche VB4), die Bruchspannung und die Bruchdehnung nehmen dabei stark ab, d. h. die mechanischen Eigenschaften lassen nach, und die Verbundhaftung kann nur unwesentlich verbessert werden.

Weiter zeigt es sich, dass die Verwendung von Polyethylenimin als Zuschlagstoff zu einem Polyamid 6 (vergleiche VB6) nicht zu einer genügenden Verbundhaftung führt.

Eine gute Verbundhaftung ist mit anderen Worten nur bei einer anspruchsgemässen Polyamid-Matrix mit den beanspruchten Proportionen von Polyethylenimin erreichbar (B1-B7).

**Bezugszeichenliste**

| | | | |
|---|---|---|---|
| 1 | quadratischer Polyamid-Testkörper | 4 | PU-Kleber-Bahn |
| | | 5 | quadratische Glasscheibe |
| 2 | Durchgangsöffnung in 1 | 6 | Pressgewicht |
| 3 | quadratische Tape-Bahn | 7 | Schablone |
| 8 | Fallkörper | c | innere Weite von 3 |
| | | d | äussere Weite von 3 |
| a | Seitenlänge von 1 | e | Seitenlänge von 5 |
| b | Durchmesser von 2 | | |

## Patentansprüche

1. Thermoplastische Polyamid-Formmasse bestehend aus:
(A) 30-94.4 Gewichtsprozent wenigstens eines Polyamides ausgewählt aus der Gruppe bestehend aus:
(A1) 20-100 Gewichtsprozent, vorzugsweise 40-60 Gewichtsprozent, wenigstens eines aliphatischen teilkristallinen Polyamids auf Basis von acyclischen Dicarbonsäuren und acyclischen Diaminen ausgewählt aus der Gruppe bestehend aus PA612, PA614 oder PA 616;
(A2) 0-80 Gewichtsprozent, vorzugsweise 40-60 Gewichtsprozent, wenigstens eines amorphen teilaromatischen Polyamids und/oder wenigstens eines cycloaliphatischen Polyamids,
wobei sich die Gewichtsprozente der Komponenten (A1) und (A2) auf 100 Gewichtsprozent der Komponente (A) ergänzen;
(B) 0.8-5.0 Gewichtsprozent Polyethylenimin (PEI) oder Copolymere oder Derivate davon;
(C) 5-60 Gewichtsprozent Füll- und/oder Verstärkungsstoffe
wobei die Komponente (C) besteht aus:
(C1) 0-40 Gewichtsprozent partikulärem Füllstoff ausgewählt aus der Gruppe bestehend aus: Russ, Talk, Glimmer, Silikate, Quarz, Wollastonit, Kaolin, Kieselsäuren, Magnesiumcarbonat, Magnesiumhydroxid, Kreide, gemahlenes oder gefälltes Calciumcarbonat, Kalk, Feldspat, anorganische Pigmente, Metalloxide, hohlkugelige Silikatfüllstoffe, Bornitrid, Borcarbid, Aluminiumnitrid, Calciumfluorid und Mischungen hiervon;
(C2) 60-100 Gewichtsprozent faserförmigem Verstärkungsstoff,
wobei sich die Gewichtsprozent der Komponenten (C1) und (C2) auf 100 Gewichtsprozent der Komponente (C) ergänzen;
(D) 0-5.0 Gewichtsprozent Additive,
wobei die Additive der Komponente (D) ausgewählt sind aus der Gruppe bestehend aus: Alterungsschutzmittel, Antioxidantien, Antiozonantien, Lichtschutzmittel, UV-Stabilisatoren, UV-Absorber, UV-Blocker, anorganische Hitzestabilisatoren auf Basis von Kupferhalogeniden und Alkalihalogeniden, organische Hitzestabilisatoren, Leitfähigkeitsadditive, optische Aufheller, Verarbeitungshilfsmittel, Nukleierungsmittel, Kristallisationsbeschleuniger, Kristallisationsverzögerer, Fliesshilfsmittel, Gleitmittel, Entformungsmittel, Weichmacher, organische Pigmente und Farbstoffe, Markierungsstoffe und Mischungen hiervon;
wobei die Summe gebildet aus (A)-(D) 100 % der thermoplastischen Polyamid-Formmasse ergibt.

2. Formmasse nach Anspruch 1, **dadurch gekennzeichnet, dass** die **Komponente (A)** in einem Anteil von 32-94.4 Gewichtsprozent, vorzugsweise im Bereich von 44.5-69.0 Gewichtsprozent vorliegt.

3. Formmasse nach einem der vorhergehenden Ansprüche, **dadurch gekennzeichnet, dass** die Polyamide der Komponente (A2) ausgewählt sind aus der Gruppe bestehend aus: den cycloaliphatischen Polyamiden MACM12/PACM12, MACM14/PACM14, MACM16/PACM16, MACM18/PACM18, 6I/6T/MACMI/MACMT/12, 6I/MACMI/MACMT, 6I/PACMI/PACMT, 6I/6T/MACMI, 6I/6T/612/MACMI/MACMT/MACM12, MACMI/MACMT/12, 6/IPDT, 6I/6T/614/MACMI/MACMT/MACM14, 6I/6T/616/MACMI/MACMT/MACM16, MACMI/MACM36, 12/PACMI, 12/MACMT, 6I/PACMT, MACM10, MACM12, MACM14, MACM16, MACM18, MACMI/12, PACM10, PACM12, MACM14, PACM16, PACM18, PACMI/12, TMDC10, TMDC12, TMDC16, TMDC18, MACMT/MACMI/12, PACMT/PACMI/12, und/oder aus den amorphen teilaromatischen Polyamiden 6I, 6/6I, MXDI, MXDI/6I, MXD6/MXDI, 6T/6I, 10T/10I, 3-6T (3-6 = 2,2,4- bzw. 2,4,4-Trimethylhexandiamin) oder Mischungen davon, wobei die Systeme 6T/6I oder 10T/10I einen Anteil von weniger als 50 Mol-% 6T- bzw. 10T-Einheiten aufweisen, und wobei ein Zusammensetzungsbereich 6T:6I bzw. 10T/10I von 20:80 bis 45:55, insbesondere 25:75 bis 40:60 bevorzugt wird;
und/oder dass die Polyamide der Komponente (A2) einen Glasübergangspunkt Tg oberhalb von 90°C, bevorzugt oberhalb von 110°C, insbesondere bevorzugt oberhalb von 120°C aufweisen.

4. Formmasse nach einem der vorhergehenden Ansprüche, **dadurch gekennzeichnet, dass** die **Komponente (B)** in einem Anteil im Bereich von 0.8-4.0 Gewichtsprozent, vorzugsweise im Bereich von 0.8-3.5 Gewichtsprozent in der Formmasse vorliegt.

5. Formmasse nach einem der vorhergehenden Ansprüche, **dadurch gekennzeichnet, dass** es sich beim Polyethylenimin der Komponente (B) um ein verzweigtes Polyethylenimin handelt, das vorzugsweise ein Verhältnis von primären zu sekundären Aminen im Bereich von 1:2-2:1 aufweist, vorzugsweise im Bereich von 1.2:1-1:1.2 und/oder ein Verhältnis von primären zu tertiären Aminen im Bereich von 3:1-1:1, vorzugsweise im Bereich von 2:1-1.4:1 und/oder ein Verhältnis von sekundären zu tertiären Aminen im Bereich von 3:1-1:1, vorzugsweise im Bereich von 2:1-1.2:1 aufweist;
und/oder dass es sich beim Polyethylenimin der Komponente (B) um ein verzweigtes Polyethylenimin handelt mit einer zahlenmittleren Molmasse Mₙ im Bereich von 500-50.000 g/mol, vorzugsweise im Bereich von 1000-2500 g/mol, und/oder dass es sich beim Polyethylenimin der Komponente (B) um ein verzweigtes Polyethylenimin mit einem Gehalt an primären Aminogruppen im Bereich von 5000-20.000 µeq/g, vorzugsweise im Bereich von 7.000-12.000 µeq/g handelt;
und/oder dass es sich beim Polyethylenimin der Komponente (B) um ein verzweigtes Polyethylenimin mit einem Wassergehalt von weniger als 4 Gewichtsprozent, bevorzugt von weniger als 3 Gewichtsprozent, insbesondere bevorzugt von weniger als 2 Gewichtsprozent handelt.

6. Formmasse nach einem der vorhergehenden Ansprüche, **dadurch gekennzeichnet, dass** die **Komponente (C)** in einem Anteil im Bereich von 30-50 Gewichtsprozent vorliegt;
und/oder dass die Komponente (C) besteht aus:
(C1) 3-25 Gewichtsprozent, insbesondere bevorzugt 5-15 Gewichtsprozent partikulärer Füllstoff, insbesondere bevorzugt ausgewählt aus der Gruppe bestehend aus: Russ, Talk, Glimmer, Silikate, Quarz, Wollastonit, Kaolin, Kieselsäuren, Magnesiumcarbonat, Magnesiumhydroxid, Kreide, gemahlenes oder gefälltes Calciumcarbonat, Kalk, Feldspat, anorganische Pigmente, einschliesslich Bariumsulfat, Zinkoxid, Zinksulfid, Lithopone, Titandioxid (Rutil, Anatas), Eisenoxid, Eisenmanganoxid, Metalloxide, insbesondere Spinelle, einschliesslich Kupfereisenspinell, Kupferchromoxid, Zink-Eisenoxid, Kobalt-Chromoxid, Kobalt-Aluminiumoxid, Magnesiumaluminiumoxid, Kupfer-Chrom-Mangan-Mischoxide, Kupfer-Mangan-Eisen-Mischoxide, Rutil-Pigmente einschliesslich Titan-Zink-Rutil, Nickel-Antimon-Titanat, Chrom-Antimon-Titanat, hohlkugelige Silikatfüllstoffe, Aluminiumoxid, Bornitrid, Borcarbid, Aluminiumnitrid, Calciumfluorid und Mischungen hiervon;
(C2) 75-97 Gewichtsprozent, insbesondere bevorzugt 85-95 Gewichtsprozent faserförmiger Verstärkungsstoff, bevorzugt ausgewählt aus der Gruppe bestehend aus: Glasfasern, Kohlenstoffasern, Graphitfasern, Aramidfasern, Nanotubes oder Mischungen davon, wobei die Fasern der Komponente (C2) mit kreisförmiger oder nicht-kreisförmiger Querschnittsfläche vorliegen können,
wobei sich die Gewichtsprozent der Komponenten (C1) und (C2) auf 100 Gewichtsprozent der Komponente (C) ergänzen.

7. Formmasse nach einem der vorhergehenden Ansprüche, **dadurch gekennzeichnet, dass** die **Komponente (D)** in einem Anteil im Bereich von 0.1-4.0 Gewichtsprozent, vorzugsweise 0.2-2.0 Gewichtsprozent vorliegt.

8. Verbund enthaltend wenigstens drei direkt aneinander grenzende und miteinander stoffschlüssig verbundene Schichten (I)-(III) folgender Art:
(I) Schicht aus einer Polyamid-Formmasse nach Anspruch 1;
(II) Polyurethan-Schicht;
(III) Schicht aus mineralischem Glas.

9. Verbund nach Anspruch 8, **dadurch gekennzeichnet, dass** die Schicht (I) aus einer Polyamid-Formmasse gemäss einem der Ansprüche 1-7 gebildet wird.

10. Verbund nach einem der vorhergehenden Ansprüche 8 oder 9, **dadurch gekennzeichnet, dass** die Polyurethan-Schicht (II) basiert auf einem reaktiven Polyurethan (PU)-Klebstoff, vorzugsweise auf einem 1K-Polyurethan-Klebstoff oder 2K-Polyurethan-Klebstoff, insbesondere bevorzugt auf Basis eines reaktiven Polyurethan-Schmelzklebers, der vorzugsweise feuchtigkeitsvernetzend ist,
und/oder dass die Polyurethan-Schicht (II) auf Basis eines 1K-Polyurethan-Schmelzkleber-Systems ausgebildet ist,
und/oder dass die Polyurethan-Schicht (II) beruht auf einem vernetzten System, vorzugsweise einem chemisch und/oder physikalisch vernetzten, insbesondere feuchtigkeitsvernetzten oder elektromagnetisch vernetzten System.

11. Verwendung einer thermoplastischen Formmasse nach einem der vorhergehenden Ansprüche 1-7 zur Herstellung eines Verbundes nach einem der Ansprüche 8-10.

12. Verfahren zur Herstellung eines Verbundes nach einem der Ansprüche 8-10, **dadurch gekennzeichnet, dass** ein Polyamid mit einem Polyethylenimin (PEI) oder einem Copolymeren oder Derivat davon, sowie gegebenenfalls faserförmigen Verstärkungsstoffen und partikulären Zuschlagstoffen vermischt wird, vorzugsweise zu einem Polyamid nach einem der Ansprüche 1-7, dieses Material in einem Spritzgussverfahren oder Extrusionsverfahren zu einem Formteil verarbeitet wird, und dieses Formteil als Schicht (I) über eine Schicht (II) Polyurethan-Klebstoff in Kontakt mit einer Schicht (III) aus mineralischem Glas gebracht wird, und anschliessend die Schicht (II) ausgehärtet wird, vorzugsweise indem die Schicht (II) vernetzt wird, vorzugsweise unter Einwirkung von Feuchtigkeit und/oder Einwirkung von elektromagnetischen Wellen.

13. Verwendung von Polyethylenimin (PEI) oder eines Derivats oder Copolymers davon in einer Polyamid-Formmasse zur Verbesserung der Verbundhaftung zu Polyurethan, insbesondere zu einem reaktiven Polyurethan (PU)-Klebstoff, vorzugsweise einem 1K-Polyurethan-Klebstoff oder 2K-Polyurethan-Klebstoff, insbesondere bevorzugt zu einem reaktiven Polyurethan-Schmelzkleber, der vorzugsweise feuchtigkeitsvernetzend ist, bevorzugt zur Ausbildung eines Verbundes nach einem der Ansprüche 8-10.

14. Verwendung nach Anspruch 13, **dadurch gekennzeichnet, dass** das Polyethylenimin in der Polyamid-Formmasse in einem Anteil im Bereich von 0.8-4.0 Gewichtsprozent, vorzugsweise im Bereich von 0.8-3.5 Gewichtsprozent in der Formmasse, bezogen auf das Gesamtgewicht der Polyamid-Formmasse, vorliegt.

15. Verwendung nach Anspruch 13 oder 14, **dadurch gekennzeichnet, dass** es sich beim Polyethylenimin der Komponente (B) um ein verzweigtes Polyethylenimin handelt, das vorzugsweise ein Verhältnis von primären zu sekundären Aminen im Bereich von 1:2-2:1 aufweist, vorzugsweise im Bereich von 1.2:1-1:1.2 und/oder ein Verhältnis von primären zu tertiären Aminen im Bereich von 3:1-1:1, vorzugsweise im Bereich von 2:1-1.4:1 und/oder ein Verhältnis von sekundären zu tertiären Aminen im Bereich von 3:1-1:1, vorzugsweise im Bereich von 2:1-1.2:1 aufweist;
und/oder dass es sich beim Polyethylenimin der Komponente (B) um ein verzweigtes Polyethylenimin handelt mit einer zahlenmittleren Molmasse Mₙ im Bereich von 500-50.000 g/mol, vorzugsweise im Bereich von 1000-2500 g/mol,
und/oder dass es sich beim Polyethylenimin der Komponente (B) um ein verzweigtes Polyethylenimin mit einem Gehalt an primären Aminogruppen im Bereich von 5000-20.000 µeq/g, vorzugsweise im Bereich von 7.000-12.000 µeq/g handelt;
und/oder dass es sich beim Polyethylenimin um ein verzweigtes Polyethylenimin mit einem Wassergehalt von weniger als 4 Gewichtsprozent, bevorzugt von weniger als 3 Gewichtsprozent, insbesondere bevorzugt von weniger als 2 Gewichtsprozent handelt.

## Claims

1. Thermoplastic polyamide moulding composition comprising:
(A) 30-94.4 weight percent of at least one polyamide selected from the group consisting of:
(A1) 20-100 weight percent, preferably 40-60 weight percent, of at least one aliphatic semi-crystalline polyamide based on acyclic dicarboxylic acids and acyclic diamines selected from the group consisting of PA612, PA614 or PA 616;
(A2) 0-80 weight percent, preferably 40-60 weight percent, of at least one amorphous semi-aromatic polyamide and/or at least one cycloaliphatic polyamide,
wherein the weight percentages of components (A1) and (A2) add up to 100 weight percent of component (A);
(B) 0.8-5.0 weight percent polyethyleneimine (PEI) or copolymers or derivatives thereof;
(C) 5-60 weight percent of fillers and/or reinforcing materials wherein component (C) consists of:
(C1) 0-40% by weight of particulate filler selected from the group consisting of: carbon black, talc, mica, silicates, quartz, wollastonite, kaolin, silicic acids, magnesium carbonate, magnesium hydroxide, chalk, ground or precipitated calcium carbonate, lime, feldspar, inorganic pigments, metal oxides, hollow spherical silicate fillers, boron nitride, boron carbide, aluminium nitride, calcium fluoride and mixtures thereof;
(C2) 60-100 per cent by weight of fibrous reinforcing material,
wherein the weight percentages of components (C1) and (C2) add up to 100 weight percent of component (C);
(D) 0-5.0 weight percent additives,
wherein the additives of component (D) are selected from the group consisting of: anti-ageing agents, antioxidants, anti-ozonants, light stabilisers, UV stabilisers, UV absorbers, UV blockers, inorganic heat stabilisers based on copper halides and alkali metal halides, organic heat stabilisers, conductivity additives, optical brighteners, processing aids, nucleating agents, crystallisation accelerators, crystallisation retarders, flow aids, lubricants, mould release agents, plasticisers, organic pigments and dyes, marking agents and mixtures thereof;
wherein the sum of (A)-(D) is 100% of the thermoplastic polyamide moulding composition.

2. Moulding compound according to claim 1, **characterised in that component (A)** is present in a proportion of 32-94.4 weight per cent, preferably in the range of 44.5-69.0 weight per cent.

3. Moulding composition according to one of the preceding claims, **characterised in that** the polyamides of component (A2) are selected from the group consisting of: the cycloaliphatic polyamides MACM12/PACM12, MACM14/PACM14, MACM16/PACM16, MACM18/PACM18, 6I/6T/MACMI/MACMT/12, 6I/MACMI/MACMT, 6I/PACMI/PACMT, 6I/6T/MACMI, 6I/6T/612/MACMI/MACMT/MACM12, MACMI/MACMT/12, 6/IPDT, 6I/6T/614/MACMI/MACMT/MACM14,
6I/6T/616/MACMI/MACMT/MACM16, MACMI/MACM36, 12/PACMI, 12/MACMT, 6I/PACMT, MACM10, MACM12, MACM14, MACM16, MACM18, MACMI/12, PACM10, PACM12, MACM14, PACM16, PACM18, PACMI/12, TMDC10, TMDC12, TMDC16, TMDC18, MACMT/MACMI/12, PACMT/PACMI/12, and/or from the amorphous partially aromatic polyamides 61, 6/6I, MXDI, MXDI/6I, MXD6/MXDI, 6T/6I, 10T/10I, 3-6T (3-6 = 2,2,4- or 2,4,4-trimethylhexanediamine) or mixtures thereof, wherein the 6T/61 or 10T/10I systems have a proportion of less than 50 mol% 6T or 10T units, and wherein a composition range of 6T:61 or 10T/101 of 20:80 to 45:55, in particular 25:75 to 40:60, is preferred;
and/or that the polyamides of component (A2) have a glass transition point Tg above 90°C, preferably above 110°C, in particular preferably above 120°C.

4. Moulding composition according to one of the preceding claims, **characterised in that component (B)** is present in the moulding composition in a proportion in the range of 0.8-4.0 per cent by weight, preferably in the range of 0.8-3.5 per cent by weight.

5. Moulding composition according to one of the preceding claims, **characterised in that** the polyethyleneimine of component (B) is a branched polyethyleneimine, which preferably has a ratio of primary to secondary amines in the range of 1:2-2:1, preferably in the range of 1.2:1-1:1.2 and/or a ratio of primary to tertiary amines in the range of 3:1-1:1, preferably in the range of 2:1-1.4:1, and/or a ratio of secondary to tertiary amines in the range of 3:1-1:1, preferably in the range of 2:1-1.2:1;
and/or that the polyethyleneimine of component (B) is a branched polyethyleneimine with a number average molecular weight Mₙin the range of 500-50,000 g/mol, preferably in the range of 1000-2500 g/mol,
and/or that the polyethyleneimine of component (B) is a branched polyethyleneimine with a primary amino group content in the range of 5000-20,000 µeq/g, preferably in the range of 7000-12,000 µeq/g;
and/or that the polyethyleneimine of component (B) is a branched polyethyleneimine with a water content of less than 4 per cent by weight, preferably less than 3 per cent by weight, and particularly preferably less than 2 per cent by weight.

6. Moulding composition according to one of the preceding claims, **characterised in that component (C)** is present in a proportion in the range of 30-50 per cent by weight;
and/or that component (C) consists of:
(C1) 3-25 per cent by weight, particularly preferably 5-15 per cent by weight, of particulate filler, particularly preferably selected from the group consisting of: carbon black, talc, mica, silicates, quartz, wollastonite, kaolin, silicic acids, magnesium carbonate, magnesium hydroxide, chalk, ground or precipitated calcium carbonate, lime, feldspar, inorganic pigments, including barium sulphate, zinc oxide, zinc sulphide, lithopone, titanium dioxide (rutile, anatase), iron oxide, iron manganese oxide, metal oxides, in particular spinels, including copper iron spinel, copper chromium oxide, zinc-iron oxide, cobalt-chromium oxide, cobalt-aluminium oxide, magnesium-aluminium oxide, copper-chromium-manganese mixed oxides, copper-manganese-iron mixed oxides, rutile pigments, including titanium-zinc rutile, nickel-antimony titanate, chromium-antimony titanate, hollow spherical silicate fillers, aluminium oxide, boron nitride, boron carbide, aluminium nitride, calcium fluoride and mixtures thereof;
(C2) 75-97 per cent by weight, particularly preferably 85-95 per cent by weight, of fibrous reinforcing material, preferably selected from the group consisting of: glass fibres, carbon fibres, graphite fibres, aramid fibres, nanotubes or mixtures thereof, wherein the fibres of component (C2) may have a circular or non-circular cross-sectional area,
wherein the weight percentages of components (C1) and (C2) add up to 100 weight percent of component (C).

7. Moulding composition according to one of the preceding claims, **characterised in that component (D)** is present in a proportion in the range of 0.1-4.0 per cent by weight, preferably 0.2-2.0 per cent by weight.

8. Composite containing at least three directly adjacent layers (I)-(III) of the following type, which are connected to each other in a material bond:
(I) Layer of a polyamide moulding composition according to claim 1;
(II) Polyurethane layer;
(III) Layer of mineral glass.

9. Composite according to claim 8, **characterised in that** layer (I) is formed from a polyamide moulding compound according to one of claims 1-7.

10. Composite according to one of the preceding claims 8 or 9, **characterised in that** the polyurethane layer (II) is based on a reactive polyurethane (PU) adhesive, preferably on a 1K polyurethane adhesive or 2K polyurethane adhesive, particularly preferably based on a reactive polyurethane hot melt adhesive, which is preferably moisture-curing,
and/or that the polyurethane layer (II) is formed on the basis of a 1K polyurethane hot melt adhesive system,
and/or that the polyurethane layer (II) is based on a cross-linked system, preferably a chemically and/or physically cross-linked system, in particular a moisture-cured or electromagnetically cross-linked system.

11. Use of a thermoplastic moulding compound according to any of the preceding claims 1-7 for the production of a composite according to any of claims 8-10.

12. Method for producing a composite according to one of claims 8-10, **characterised in that** a polyamide is mixed with a polyethyleneimine (PEI) or a copolymer or derivative thereof, as well as, if desired, fibrous reinforcing materials and particulate additives, preferably to form a polyamide according to one of claims 1-7, this material is processed into a moulded part in an injection moulding or extrusion process, and this moulded part is brought into contact as layer (I) via a layer (II) of polyurethane adhesive with a layer (III) of mineral glass, and the layer (II) is then cured, preferably by cross-linking the layer (II), preferably under the influence of moisture and/or electromagnetic waves.

13. Use of polyethyleneimine (PEI) or a derivative or copolymer thereof in a polyamide moulding compound to improve the composite adhesion to polyurethane, in particular to a reactive polyurethane (PU) adhesive, preferably a 1K polyurethane adhesive or 2K polyurethane adhesive, in particular preferably to a reactive polyurethane hot melt adhesive, which is preferably moisture-crosslinking, preferably to form a composite according to one of claims 8-10.

14. Use according to claim 13, **characterised in that** the polyethyleneimine is present in the polyamide moulding compound in a proportion in the range of 0.8-4.0 per cent by weight, preferably in the range of 0.8-3.5 per cent by weight in the moulding compound, based on the total weight of the polyamide moulding compound.

15. Use according to claim 13 or 14, **characterised in that** the polyethyleneimine of component (B) is a branched polyethyleneimine, which preferably has a ratio of primary to secondary amines in the range of 1:2-2:1, preferably in the range of 1.2:1-1:1.2 and/or a ratio of primary to tertiary amines in the range of 3:1-1:1, preferably in the range of 2:1-1.4:1, and/or a ratio of secondary to tertiary amines in the range of 3:1-1:1, preferably in the range of 2:1-1.2:1;
and/or that the polyethyleneimine of component (B) is a branched polyethyleneimine with a number-average molar mass Mₙin the range of 500-50,000 g/mol, preferably in the range of 1000-2500 g/mol,
and/or that the polyethyleneimine of component (B) is a branched polyethyleneimine with a primary amino group content in the range of 5000-20,000 µeq/g, preferably in the range of 7000-12,000 µeq/g;
and/or that the polyethyleneimine is a branched polyethyleneimine with a water content of less than 4 per cent by weight, preferably less than 3 per cent by weight, particularly preferably less than 2 per cent by weight.

## Revendications

1. Masse à mouler thermoplastique à base de polyamide, constituée de :
(A) 30 à 94,4 % en poids d'au moins un polyamide choisi dans le groupe constitué par :
(A1) 20 à 100 % en poids, de préférence 40 à 60 % en poids, d'au moins un polyamide aliphatique semi-cristallin à base d'acides dicarboxyliques acycliques et de diamines acycliques choisis dans le groupe constitué par le PA612, le PA614 ou le PA 616 ;
(A2) 0 à 80 % en poids, de préférence 40 à 60 % en poids, d'au moins un polyamide amorphe partiellement aromatique et/ou d'au moins un polyamide cycloaliphatique,
les pourcentages en poids des composants (A1) et (A2) se complétant pour atteindre 100 % en poids du composant (A) ;
(B) 0,8 à 5,0 % en poids de polyéthylèneimine (PEI) ou de copolymères ou dérivés de celle-ci ;
(C) 5 à 60 % en poids de charges et/ou de renforts le composant (C) étant constitué de :
(C1) 0 à 40 % en poids de charge particulaire choisie dans le groupe constitué par : noir de carbone, talc, mica, silicates, quartz, wollastonite, kaolin, acides siliciques, carbonate de magnésium, hydroxyde de magnésium, craie, carbonate de calcium broyé ou précipité, chaux, feldspath, pigments inorganiques, oxydes métalliques, charges silicatées sphériques creuses, nitrure de bore, carbure de bore, nitrure d'aluminium, fluorure de calcium et leurs mélanges ;
(C2) 60 à 100 % en poids de matière de renforcement fibreuse,
les pourcentages en poids des composants (C1) et (C2) se complétant pour atteindre 100 % en poids du composant (C) ;
(D) 0 à 5,0 % en poids d'additifs,
les additifs du composant (D) étant choisis dans le groupe constitué par : agents anti-vieillissement, antioxydants, antiozonants, agents photoprotecteurs, stabilisateurs UV, absorbeurs UV, bloqueurs UV, stabilisateurs thermiques inorganiques à base d'halogénures de cuivre et d'halogénures alcalins, stabilisateurs thermiques organiques, additifs de conductivité, azurants optiques, adjuvants de mise en œuvre, agents de nucléation, accélérateurs de cristallisation, retardateurs de cristallisation, agents fluidifiants, lubrifiants, agents de démoulage, plastifiants, pigments et colorants organiques, agents de marquage et leurs mélanges ;
la somme formée par (A) à (D) représentant 100 % de la masse de moulage thermoplastique à base de polyamide.

2. Masse à mouler selon la revendication 1, **caractérisée en ce que** le **composant (A)** est présent dans une proportion de 32 à 94,4 % en poids, de préférence dans la plage de 44,5 à 69,0 % en poids.

3. Composition de moulage selon l'une des revendications précédentes, **caractérisée en ce que** les polyamides du composant (A2) sont choisis dans le groupe constitué par : les polyamides cycloaliphatiques MACM12/PACM12, MACM14/PACM14, MACM16/PACM16, MACM18/PACM18, 61/6T/MACMI/MACMT/12, 6I/MACMI/MACMT, 61/PACMI/PACMT, 61/6T/MACMI, 6I/6T/612/MACMI/MACMT/MACM12, MACMI/MACMT/12, 6/IPDT, 6I/6T/614/MACMI/MACMT/MACM14, 6I/6T/616/MACMI/MACMT/MACM16, MACMI/MACM36, 12/PACMI, 12/MACMT, 6I/PACMT, MACM10, MACM12, MACM14, MACM16, MACM18, MACMI/12, PACM10, PACM12, MACM14, PACM16, PACM18, PACMI/12, TMDC10, TMDC12, TMDC16, TMDC18, MACMT/MACMI/12, PACMT/PACMI/12, et/ou à partir des polyamides amorphes partiellement aromatiques 6I, 6/61, MXDI, MXDI/6I, MXD6/MXDI, 6T/61, 10T/10I, 3-6T (3-6 = 2,2,4- ou 2,4,4-triméthylhexanediamine) ou de mélanges de ceux-ci, les systèmes 6T/61 ou 10T/10I ayant une teneur inférieure à 50 % en moles d'unités 6T ou 10T, et une plage de composition 6T:6I ou 10T/10I de 20:80 à 45:55, en particulier de 25:75 à 40:60, étant préférée ;
et/ou **en ce que** les polyamides du composant (A2) présentent un point de transition vitreuse Tg supérieur à 90 °C, de préférence supérieur à 110 °C, en particulier de préférence supérieur à 120 °C.

4. Masse à mouler selon l'une des revendications précédentes, **caractérisée en ce que** le **composant (B)** est présent dans la masse à mouler dans une proportion comprise entre 0,8 et 4,0 % en poids, de préférence entre 0,8 et 3,5 % en poids.

5. Masse à mouler selon l'une des revendications précédentes, **caractérisée en ce que** la polyéthylèneimine du composant (B) est une polyéthylèneimine ramifiée qui présente de préférence un rapport entre les amines primaires et secondaires compris entre 1:2 et 2:1, de préférence compris entre 1,2:1 et 1:1.2 et/ou un rapport entre les amines primaires et les amines tertiaires compris entre 3:1 et 1:1, de préférence compris entre 2:1 et 1,4:1, et/ou un rapport entre les amines secondaires et les amines tertiaires compris entre 3:1 et 1:1, de préférence compris entre 2:1 et 1,2:1 ;
et/ou **en ce que** la polyéthylèneimine du composant (B) est une polyéthylèneimine ramifiée ayant une masse molaire moyenne en nombre Mₙcomprise entre 500 et 50 000 g/mol, de préférence comprise entre 1 000 et 2 500 g/mol,
et/ou que la polyéthylèneimine du composant (B) est une polyéthylèneimine ramifiée ayant une teneur en groupes amino primaires comprise entre 5 000 et 20 000 µeq/g, de préférence comprise entre 7 000 et 12 000 µeq/g ;
et/ou que la polyéthylèneimine du composant (B) est une polyéthylèneimine ramifiée ayant une teneur en eau inférieure à 4 % en poids, de préférence inférieure à 3 % en poids, de préférence encore inférieure à 2 % en poids.

6. Masse à mouler selon l'une des revendications précédentes, **caractérisée en ce que** le **composant (C)** est présent dans une proportion comprise entre 30 et 50 % en poids ;
et/ou **en ce que** le composant (C) est constitué de :
(C1) 3 à 25 % en poids, de préférence 5 à 15 % en poids, de charge particulaire, de préférence choisie dans le groupe constitué par : noir de carbone, talc, mica, silicates, quartz, wollastonite, kaolin, acides siliciques, carbonate de magnésium, hydroxyde de magnésium, craie, carbonate de calcium broyé ou précipité, chaux, feldspath, pigments inorganiques, y compris sulfate de baryum, oxyde de zinc, sulfure de zinc, lithopone, dioxyde de titane (rutile, anatase), oxyde de fer, oxyde de fer et de manganèse, oxydes métalliques, en particulier les spinelles, y compris le spinelle de cuivre et de fer, l'oxyde de cuivre et de chrome, l' oxyde de zinc et de fer, oxyde de cobalt et de chrome, oxyde de cobalt et d'aluminium, oxyde de magnésium et d'aluminium, oxydes mixtes de cuivre, de chrome et de manganèse, oxydes mixtes de cuivre, de manganèse et de fer, pigments de rutile, y compris le rutile de titane-zinc, le titanate de nickel-antimoine, le titanate de chrome-antimoine, les charges silicatées sphériques creuses, l'oxyde d'aluminium, le nitrure de bore, le carbure de bore, le nitrure d'aluminium, le fluorure de calcium et leurs mélanges ;
(C2) 75 à 97 % en poids, de préférence 85 à 95 % en poids, d'une matière de renforcement fibreuse, choisie de préférence dans le groupe constitué par : fibres de verre, fibres de carbone, fibres de graphite, fibres d'aramide, nanotubes ou leurs mélanges, les fibres du composant (C2) pouvant présenter une section transversale circulaire ou non circulaire,
les pourcentages en poids des composants (C1) et (C2) se complétant pour atteindre 100 % en poids du composant (C).

7. Masse moulable selon l'une des revendications précédentes, **caractérisée en ce que** le **composant (D)** est présent dans une proportion comprise entre 0,1 et 4,0 % en poids, de préférence entre 0,2 et 2,0 % en poids.

8. Composite comprenant au moins trois couches (I) à (III) directement adjacentes et reliées entre elles par adhérence de matière, du type suivant :
(I) couche constituée d'une masse à mouler en polyamide selon la revendication 1 ;
(II) couche de polyuréthane ;
(III) couche de verre minéral.

9. Composite selon la revendication 8, **caractérisé en ce que** la couche (I) est formée d'une masse moulable en polyamide selon l'une des revendications 1 à 7.

10. Composite selon l'une des revendications 8 ou 9 précédentes, **caractérisé en ce que** la couche de polyuréthane (II) est à base d'une colle polyuréthane (PU) réactive, de préférence d'une colle polyuréthane 1K ou d'une colle polyuréthane 2K, en particulier à base d'une colle thermofusible polyuréthane réactive, de préférence réticulable à l'humidité,
et/ou **en ce que** la couche de polyuréthane (II) est formée à base d'un système de colle thermofusible polyuréthane 1K,
et/ou que la couche de polyuréthane (II) repose sur un système réticulé, de préférence un système réticulé chimiquement et/ou physiquement, en particulier réticulé par l'humidité ou réticulé électromagnétiquement.

11. Utilisation d'une masse à mouler thermoplastique selon l'une des revendications 1 à 7 précédentes pour la fabrication d'un composite selon l'une des revendications 8 à 10.

12. Procédé de fabrication d'un composite selon l'une des revendications 8 à 10, **caractérisé en ce qu'**un polyamide est mélangé à une polyéthylèneimine (PEI) ou à un copolymère ou dérivé de celle-ci, ainsi qu'éventuellement à des matériaux de renforcement fibreux et à des additifs particulaires, de préférence pour former un polyamide selon l'une des revendications 1 à 7, ce matériau est transformé en une pièce moulée dans un procédé de moulage par injection ou d'extrusion, et cette pièce moulée est amenée sous forme de couche (I) au-dessus d'une couche (II) d'adhésif polyuréthane en contact avec une couche (III) de verre minéral, puis la couche (II) est durcie, de préférence en réticulant la couche (II), de préférence sous l'effet de l'humidité et/ou sous l'effet d'ondes électromagnétiques.

13. Utilisation de polyéthylèneimine (PEI) ou d'un dérivé ou copolymère de celle-ci dans une masse moulable à base de polyamide pour améliorer l'adhérence composite au polyuréthane, en particulier à une colle polyuréthane réactive (PU), de préférence un adhésif polyuréthane 1K ou un adhésif polyuréthane 2K, en particulier de préférence un adhésif thermofusible polyuréthane réactif, qui est de préférence réticulable à l'humidité, de préférence pour former un composite selon l'une des revendications 8 à 10.

14. Utilisation selon la revendication 13, **caractérisée en ce que** la polyéthylèneimine est présente dans la masse moulable à base de polyamide dans une proportion comprise entre 0,8 et 4,0 % en poids, de préférence entre 0,8 et 3,5 % en poids dans la masse moulable, par rapport au poids total de la masse moulable à base de polyamide.

15. Utilisation selon la revendication 13 ou 14, **caractérisée en ce que** la polyéthylèneimine du composant (B) est une polyéthylèneimine ramifiée qui présente de préférence un rapport entre les amines primaires et secondaires compris entre 1:2 et 2:1, de préférence compris entre 1,2:1 et 1:1.2 et/ou un rapport entre les amines primaires et les amines tertiaires compris entre 3:1 et 1:1, de préférence compris entre 2:1 et 1,4:1, et/ou un rapport entre les amines secondaires et les amines tertiaires compris entre 3:1 et 1:1, de préférence compris entre 2:1 et 1,2:1 ;
et/ou **en ce que** la polyéthylèneimine du composant (B) est une polyéthylèneimine ramifiée ayant une masse molaire moyenne en nombre Mₙcomprise entre 500 et 50 000 g/mol, de préférence comprise entre 1 000 et 2 500 g/mol,
et/ou que la polyéthylèneimine du composant (B) est une polyéthylèneimine ramifiée ayant une teneur en groupes amino primaires comprise entre 5 000 et 20 000 µeq/g, de préférence comprise entre 7 000 et 12 000 µeq/g ;
et/ou que la polyéthylèneimine est une polyéthylèneimine ramifiée ayant une teneur en eau inférieure à 4 % en poids, de préférence inférieure à 3 % en poids, de préférence encore inférieure à 2 % en poids.
